# EUROPEAN PATENT APPLICATION

(11) **EP 4 818 559 A1**
(43) Date of publication of application: **07.10.2026**
(21) Application number: 26729284.5
(22) Date of filing: 27.01.2026
(51) Int. Cl.: F16K 11/087, F16K 5/06, F25B 41/26

(54) **FLOW PATH SWITCHING VALVE AND REFRIGERATION DEVICE**

(30) Priority: 30.01.2025 JP 2025014073
(71) Applicant: DAIKIN INDUSTRIES, LTD., Osaka-shi, Osaka 530-0001 (JP)
(72) Inventor: The designation of the inventor has not yet been filed
(74) Representative: Hoffmann Eitle
(86) International application number: PCT/JP2026/002704
(87) International publication number: WO 2026/164103

(57) **Abstract**

A flow path switching valve includes a housing (31) and a valve element (60), in which first, second, and third refrigerant flow paths that communicate a valve chamber (31A) in the housing (31) with an outside of the housing (31) are formed in the housing (31), the valve element (60) includes a first passage (61) that connects the first and second refrigerant flow paths in a first orientation, connects the first and third refrigerant flow paths in a second orientation, and in which a refrigerant having a first pressure flows, and a second passage (62) that communicates with the third refrigerant flow path in the first orientation, communicates with the second refrigerant flow path in a second orientation, and in which a refrigerant having a second pressure higher than the first pressure flows, the valve chamber (31A) and the second passage (62) communicate with each other when the valve element (60) is in a first orientation or a second orientation, and the flow path switching valve includes a pressure equalizing mechanism (80) that is switchable between a mode of connecting the first passage (61) and the valve chamber (31A) and a mode of canceling the connection, and allows connection of the first passage (61) and the valve chamber (31A) when the valve element (60) is in the first orientation or the second orientation.

## Description

### TECHNICAL FIELD

The present disclosure relates to a flow path switching valve and a refrigeration apparatus.

### BACKGROUND ART

Patent Literature 1 below discloses a multi-directional ball valve that functions as a three-way valve or a four-way valve and alternately switches a certain fluid system to a plurality of fluid systems. The multi-directional ball valve includes a casing, a valve ball housed in the casing, and a valve seat supporting an outer peripheral surface of the valve ball, and the valve ball is rotatably supported by the valve seat. Three or four inlet and outlet ports are formed in the casing, and one or two valve holes are formed in the valve ball. By rotating the valve ball, the one end of one or two valve holes is aligned with the one or two inlet and outlet ports, and the other end of the valve hole is aligned with the other inlet and outlet port, and thus, the path of the fluid can be switched.

### CITATION LIST

### [PATENT LITERATURE]

PATENT LITERATURE 1: Japanese Laid-Open Patent Publication No. S59-13170

### SUMMARY OF THE INVENTION

### [TECHNICAL PROBLEM]

In a case where the multi-directional ball valve described in Patent Literature 1 is used to switch a flow path of a high-pressure fluid, for example, a refrigerant flowing through a refrigeration apparatus, a high pressure is applied not only to the inside of the valve ball but also to an outer surface of the valve ball. Therefore, the valve ball is strongly pressed against the valve seat, and it is necessary to rotate the valve element with high torque in order to switch the flow path. Therefore, a high-output motor and a deceleration gear having a high deceleration ratio are required, which causes an increase in size and cost of a flow path switching valve.

An object of the present disclosure is to provide a flow path switching valve and a refrigeration apparatus capable of reducing torque for rotating a valve element.

### [SOLUTION TO PROBLEM]

(1) A flow path switching valve of the present disclosure includes a housing including a valve chamber inside, and a valve element that is rotatably housed in the valve chamber and is switched between a first orientation and a second orientation by being rotationally operated, in which a first refrigerant flow path, a second refrigerant flow path, and a third refrigerant flow path that communicate the valve chamber with an outside of the housing are formed in the housing, and the valve element includes a first passage that connects the first refrigerant flow path and the second refrigerant flow path in the first orientation, and connects the first refrigerant flow path and the third refrigerant flow path in the second orientation, and through which a refrigerant having a first pressure flows, and a second passage that communicates with the third refrigerant flow path in the first orientation, communicates with the second refrigerant flow path in the second orientation, and through which a refrigerant having a second pressure higher than the first pressure flows, the valve chamber and the second passage communicate with each other when the valve element is in the first orientation or the second orientation, and the flow path switching valve includes a pressure equalizing mechanism that is switchable between a mode of connecting the first passage and the valve chamber and a mode of canceling the connection, and allows connection of the first passage and the valve chamber when the valve element is in the first orientation or the second orientation.
   In the above configuration, by connecting the first flow path and the valve chamber by the pressure equalizing mechanism, a high-pressure (second pressure) refrigerant and a low-pressure (first pressure) refrigerant can be mixed in the flow path switching valve, and the refrigerant can be balanced in pressure (equalized in pressure). Therefore, a torque for rotating the valve element can be reduced, and a motor can be downsized, a transmission mechanism can be downsized, and the like.
(2) In the flow path switching valve according to (1), a fourth refrigerant flow path communicating the valve chamber with the outside of the housing is formed in the housing, and the second passage connects the third refrigerant flow path and the fourth refrigerant flow path in the first orientation, and connects the second refrigerant flow path and the fourth refrigerant flow path in the second orientation.
   In the above configuration, a high-pressure refrigerant can flow by utilizing the second passage, and the flow path switching valve can be used as a four-way switching valve.
(3) In the flow path switching valve according to (1) or (2), the pressure equalizing mechanism includes a pressure equalizing flow path that connects the first passage and the valve chamber, and an opening and closing mechanism that opens and closes the pressure equalizing flow path.
   In this configuration, the high-pressure refrigerant and the low-pressure refrigerant can be mixed via the pressure equalizing flow path.
(4) The flow path switching valve according to (3) further includes an operation mechanism that rotationally operates the valve element, in which the operation mechanism includes a drive shaft disposed on an axis of the valve element, the valve element includes a coupling portion to which the drive shaft is coupled and in which the pressure equalizing flow path is formed, and the opening and closing mechanism opens and closes the pressure equalizing flow path by moving the drive shaft.
   In this configuration, the opening and closing mechanism can be configured by using the drive shaft configuring the operation mechanism.
(5) In the flow path switching valve according to (4), the operation mechanism includes a drive unit that rotates the drive shaft for a rotational operation of the valve element, and the opening and closing mechanism opens and closes the pressure equalizing flow path by using rotation of the drive shaft by the drive unit.
   In this configuration, the opening and closing mechanism can be configured by using the drive shaft and the drive unit configuring the operation mechanism. Therefore, the drive unit dedicated to the opening and closing mechanism can be omitted.
(6) In the flow path switching valve according to (5), the opening and closing mechanism includes a converter that converts the rotation of the drive shaft by the drive unit into axial movement of the drive shaft, and the pressure equalizing flow path is opened and closed by the converter moving the drive shaft in the axial direction.
   In this configuration, the drive shaft is moved in the axial direction by using the rotation of the drive shaft by the drive unit, and the pressure equalizing flow path can be opened and closed.
(7) In the flow path switching valve according to (6), the converter includes a cam surface that is provided on one of the coupling portion or the drive shaft and has an axial position changing in a circumferential direction of the drive shaft, and a cam receiver provided on another one of the coupling portion or the drive shaft and in contact with the cam surface.
   In this configuration, the drive shaft is moved in the axial direction along the cam surface by rotating the drive shaft, and the pressure equalizing flow path can be opened and closed.
(8) In the flow path switching valve according to (6) or (7), the drive shaft has an axial end surface that closes the pressure equalizing flow path.
   In this configuration, the pressure equalizing flow path can be easily opened and closed by movement of the drive shaft in the axial direction.
(9) In the flow path switching valve according to (5), a communication path communicating with the valve chamber is formed in a part of the drive shaft in the circumferential direction, and the opening and closing mechanism causes the drive unit to rotate the drive shaft to a rotational position at which the communication path communicates with the pressure equalizing flow path and a rotational position at which the communication is canceled.
   In this configuration, the pressure equalizing flow path can be opened and closed by rotating the drive shaft.
(10) In the flow path switching valve according to (5), the opening and closing mechanism includes a shutoff member that closes the pressure equalizing flow path and moves by rotation of the drive shaft, and the opening and closing mechanism causes the drive unit to rotate the drive shaft to a rotational position at which the pressure equalizing flow path is closed by the shutoff member and a rotational position at which the pressure equalizing flow path is released from being closed.
   In such a configuration, the pressure equalizing flow path can be opened and closed by rotating the drive shaft.
(11) A refrigeration apparatus of the present disclosure includes a refrigerant circuit including the flow path switching valve according to any one of (1) to (10).
(12) The refrigeration apparatus according to (11) further includes a control unit that controls the pressure equalizing mechanism of the flow path switching valve, in which when receiving a signal for rotating the valve element, the control unit controls the pressure equalizing mechanism to connect the first passage and the valve chamber for a predetermined time in a state where the valve element is in the first orientation or the second orientation.

In this configuration, the high-pressure refrigerant and the low-pressure refrigerant can be sufficiently equalized in pressure, and the torque for rotating the valve element can be reduced.

### BRIEF DESCRIPTION OF DRAWINGS

[FIG. 1] FIG. 1 is a diagram of a refrigerant circuit of a refrigeration apparatus including a flow path switching valve according to a first embodiment of the present disclosure.
[FIG. 2] FIG. 2 is a plan view of an interior of an outdoor unit.
[FIG. 3] FIG. 3 is a front view of a machine chamber of the outdoor unit.
[FIG. 4] FIG. 4 is a perspective view of the flow path switching valve.
[FIG. 5] FIG. 5 is a perspective view of a valve element and a drive shaft of the flow path switching valve.
[FIG. 6A] FIG. 6A is a sectional view taken along line E-E in FIG. 4 for describing an action of the flow path switching valve in a first mode.
[FIG. 6B] FIG. 6B is the sectional view taken along line E-E in FIG. 4 for describing an action of the flow path switching valve in a second mode.
[FIG. 7] FIG. 7 is a front view of the valve element.
[FIG. 8] FIG. 8 is a fragmentary view in the direction of arrow F in FIG. 7.
[FIG. 9] FIG. 9 is a front view showing an end surface of the drive shaft on a valve element side.
[FIG. 10] FIG. 10 is a fragmentary view in the direction of arrow G in FIG. 9.
[FIG. 11] FIG. 11 is a schematic explanatory diagram of the flow path switching valve showing a state in which a pressure equalizing mechanism is not acting.
[FIG. 12] FIG. 12 is a schematic explanatory diagram of the flow path switching valve showing a state in which the pressure equalizing mechanism is acting.
[FIG. 13A] FIG. 13A is an explanatory diagram showing a flow of operation of the flow path switching valve.
[FIG. 13B] FIG. 13B is a flowchart showing a control procedure of a control unit related to switching of operation.
[FIG. 13C] FIG. 13C is a flowchart showing a control procedure of the control unit related to switching of operation in a modification.
[FIG. 14] FIG. 14 is a perspective view showing a valve element and a drive shaft according to a second embodiment.
[FIG. 15] FIG. 15 is a front view of the valve element and the drive shaft.
[FIG. 16] FIG. 16 is a schematic explanatory diagram of the flow path switching valve showing a state in which the pressure equalizing mechanism is not acting.
[FIG. 17] FIG. 17 is a schematic explanatory diagram of the flow path switching valve showing a state in which the pressure equalizing mechanism is acting.
[FIG. 18A] FIG. 18A is an explanatory diagram showing a flow of operation of the flow path switching valve.
[FIG. 18B] FIG. 18B is an explanatory diagram showing a flow of operation of the flow path switching valve.
[FIG. 19A] FIG. 19A is a schematic explanatory diagram of the flow path switching valve showing a state in which the pressure equalizing mechanism is not acting in a third embodiment.
[FIG. 19B] FIG. 19B is a plan view showing a positional relationship between the pressure equalizing flow path and the shutoff member in the state shown in FIG. 19A.
[FIG. 20A] FIG. 20A is a schematic explanatory diagram of the flow path switching valve showing a state in which the pressure equalizing mechanism is acting in a third embodiment.
[FIG. 20B] FIG. 20B is a plan view showing a positional relationship between the pressure equalizing flow path and the shutoff member in the state shown in FIG. 20A.
[FIG. 21] FIG. 21 is a perspective view of the valve element.
[FIG. 22] FIG. 22 is a perspective view of the drive shaft.
[FIG. 23A] FIG. 23A is an explanatory diagram showing a flow of operation of the flow path switching valve.
[FIG. 23B] FIG. 23B is an explanatory diagram showing a flow of operation of the flow path switching valve.
[FIG. 24] FIG. 24 is a flowchart showing a control procedure of the control unit related to switching of operation.

### DETAILED DESCRIPTION

Hereinafter, embodiments of the present disclosure will be described in detail with reference to the accompanying drawings.

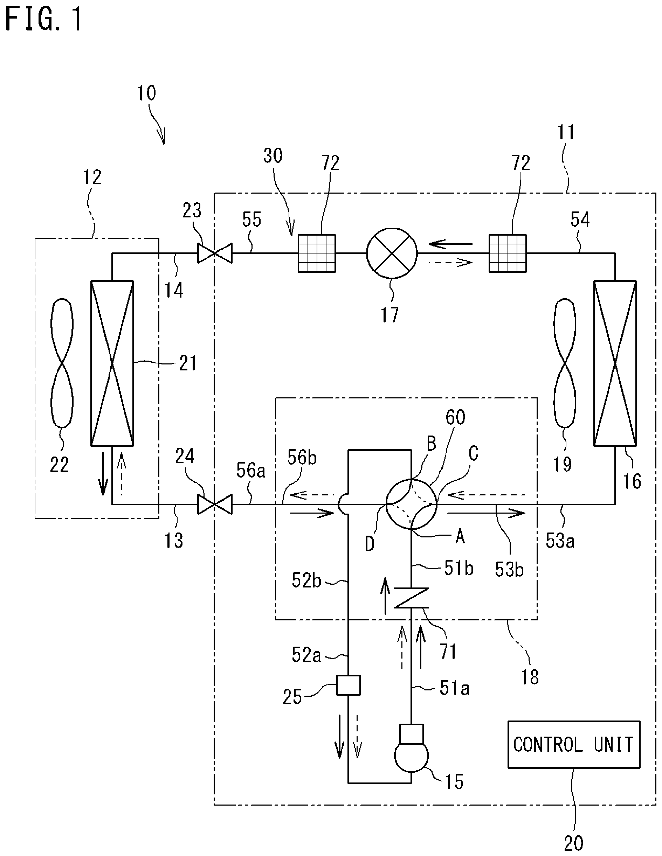

FIG. 1 is a diagram of a refrigerant circuit of a refrigeration apparatus including a flow path switching valve according to a first embodiment of the present disclosure.

A refrigeration apparatus 10 includes a refrigerant circuit 30 configured to execute vapor compression refrigeration cycle operation. The refrigeration apparatus 10 according to the present embodiment is an air conditioner. As shown in FIG. 1, the air conditioner 10 includes an outdoor unit (heat source unit) 11 and an indoor unit (utilization unit) 12. The outdoor unit 11 and the indoor unit 12 are connected by connection pipes 13 and 14, respectively. The outdoor unit 11, the indoor unit 12, and the connection pipes 13 and 14 form the refrigerant circuit 30. In the outdoor unit 11, shutoff valves 23 and 24 are provided at connecting portions of the connection pipes 13 and 14. The refrigeration apparatus 10 is not limited to an air conditioner but may be a refrigerator, a freezer, a hot-water supplier, a ventilator, or the like.

### (Configuration of refrigerant circuit)

As shown in FIG. 1, the outdoor unit 11 is provided with a compressor 15, an accumulator 25, an outdoor heat exchanger (heat-source heat exchanger) 16, an expansion valve 17, and a four-way switching valve (flow path switching valve) 18 constituting the refrigerant circuit 30. The outdoor unit 11 is also provided with an outdoor fan 19. The indoor unit 12 is provided with an indoor heat exchanger (utilization heat exchanger) 21 constituting the refrigerant circuit 30. The indoor unit 12 is also provided with an indoor fan 22.

The four-way switching valve 18 according to the present embodiment has four ports A to D, and is unitized including refrigerant flow paths 51b, 52b, 53b, and 56b communicating with the ports A to D. The compressor 15 is, for example, a positive displacement compressor such as a scroll type or a rotary type, and incorporates a compressor motor. The compressor 15 compresses a refrigerant sucked from a suction pipe 52a, and then discharges the compressed refrigerant from a discharge pipe 51a.

In the outdoor unit 11, a discharge side of the compressor 15 is connected to the refrigerant flow path 51b and the port A of the four-way switching valve 18 via the discharge pipe 51a that is a refrigerant pipe. The refrigerant flow path 51b is provided with a check valve 71 that suppresses backflow of the refrigerant.

A suction side of the compressor 15 is connected to the refrigerant flow path 52b and the port B of the four-way switching valve 18 via the suction pipe 52a that is a refrigerant pipe. The accumulator 25 is provided in the middle of the suction pipe 52a.

The outdoor heat exchanger 16 is configured by a cross-fin type fin-and-tube heat exchanger, a microchannel heat exchanger, or the like. A gas-side end of the outdoor heat exchanger 16 is connected to the refrigerant flow path 53b and the port C of the four-way switching valve 18 via a refrigerant pipe 53a. A liquid-side end of the outdoor heat exchanger 16 is connected to one end side of the expansion valve 17 via a refrigerant pipe 54. The refrigerant pipe 54 is provided with a strainer (filter) 72 that removes foreign substances in the refrigerant.

The expansion valve 17 is, for example, an electric valve whose opening degree is adjustable. The other end of the expansion valve 17 is connected to the liquid-side shutoff valve 23 via a refrigerant pipe 55. The refrigerant pipe 55 is provided with the strainer 72 that removes foreign substances in the refrigerant.

The indoor heat exchanger 21 is configured by a cross-fin type fin-and-tube heat exchanger, a microchannel heat exchanger, or the like. A liquid-side end of the indoor heat exchanger 21 is connected to the liquid-side shutoff valve 23 via the liquid-side connection pipe 14. A gas-side end of the indoor heat exchanger 21 is connected to the gas-side shutoff valve 24 via the gas-side connection pipe 13. The gas-side shutoff valve 24 is connected to the refrigerant flow path 56b and the port D of the four-way switching valve 18 via the refrigerant pipe 56a.

The four-way switching valve 18 switches a flow path between a first mode (mode indicated by a solid line in FIG. 1) in which the port A and the port C communicate with each other and the port B and the port D communicate with each other and a second mode (mode indicated by a dotted line in FIG. 1) in which the port A and the port D communicate with each other and the port B and the port C communicate with each other. In the first mode, the refrigerant discharged from the compressor 15 flows to the outdoor heat exchanger 16, and in the second mode, the refrigerant discharged from the compressor 15 flows to the indoor heat exchanger 21.

The outdoor fan 19 is disposed near the outdoor heat exchanger 16. The outdoor fan 19 is rotationally driven by a motor and blows air to the outdoor heat exchanger 16. The refrigerant flowing inside the outdoor heat exchanger 16 exchanges heat with outdoor air sent by the outdoor fan 19, and evaporates (absorbs heat) or condenses (radiates heat).

The indoor fan 22 is disposed near the indoor heat exchanger 21. The indoor fan 22 is rotationally driven by a motor and blows air to the indoor heat exchanger 21. The refrigerant flowing inside the indoor heat exchanger 21 exchanges heat with indoor air sent by the indoor fan 22, and condenses (radiates heat) or evaporates (absorbs heat).

When executing a cooling operation, the air conditioner 10 switches the four-way switching valve 18 to the first mode, and when executing a heating operation, the air conditioner 10 switches the four-way switching valve 18 to the second mode. In the cooling operation, a gas refrigerant discharged from the compressor 15 flows through the four-way switching valve 18 into the outdoor heat exchanger 16 functioning as a condenser, and is condensed into a liquid refrigerant. This liquid refrigerant is decompressed by the expansion valve 17 to become a gas-liquid two-phase refrigerant, and flows into the indoor heat exchanger 21 functioning as an evaporator. The gas-liquid two-phase refrigerant exchanges heat with the air sent by the indoor fan 22 and is evaporated into a gas refrigerant. The air cooled by the heat exchange is fed into the room. The gas refrigerant flowing out of the indoor heat exchanger 21 is sucked into the compressor 15 through the four-way switching valve 18.

In the heating operation, the gas refrigerant discharged from the compressor 15 flows through the four-way switching valve 18 into the indoor heat exchanger 21 functioning as a condenser. The gas refrigerant exchanges heat with the air sent by the indoor fan 22 and is condensed into a liquid refrigerant. The air heated by the heat exchange is fed into the room. The liquid refrigerant flowing out of the indoor heat exchanger 21 is decompressed by the expansion valve 17 to become a gas-liquid two-phase refrigerant, and flows into the outdoor heat exchanger 16 functioning as an evaporator. The gas-liquid two-phase refrigerant is evaporated into a gas refrigerant in the outdoor heat exchanger 16. The gas refrigerant is sucked into the compressor 15 through the four-way switching valve 18.

The air conditioner 10 switches the four-way switching valve 18 from the second mode to the first mode in a case of performing defrost operation to melt frost adhering to the outdoor heat exchanger 16 during the heating operation. When the heating operation is stopped, the air conditioner 10 switches the four-way switching valve 18 from the second mode to the first mode.

The air conditioner 10 includes a control unit 20 that controls the compressor 15, the four-way switching valve 18, the expansion valve 17, the fans 19 and 22, and the like in order to perform the cooling operation, the heating operation, and the like as described above. The control unit 20 controls various devices on the basis of, for example, an instruction to start or stop operation, an instruction to switch operation such as cooling and heating, and a set value of indoor temperature or air volume, which are input to a remote controller or the like. Note that the control unit 20 includes a processor and a storage. The processor includes a central processing unit (CPU), a graphics processing unit (GPU), and the like. The processor may be an application specific integrated circuit (ASIC) or a programmable logic device such as a gate array and a field programmable gate array (FPGA). The ASIC or the programmable logic device is configured to be able to execute processing similar to the processing of the control program. The storage includes a volatile memory such as a static random access memory (SRAM) and a dynamic random access memory (DRAM), and a nonvolatile memory such as a flash memory, a hard disk, and a read only memory (ROM). The nonvolatile memory stores a control program as a computer program, and control data. The control unit 20 performs various functions by the processor executing the control program stored in the storage.

### (Configuration of outdoor unit)

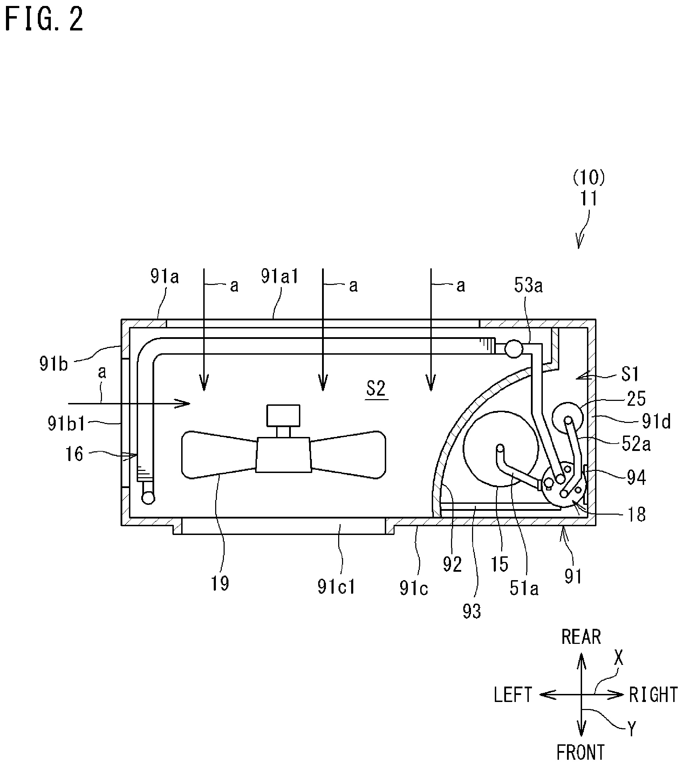

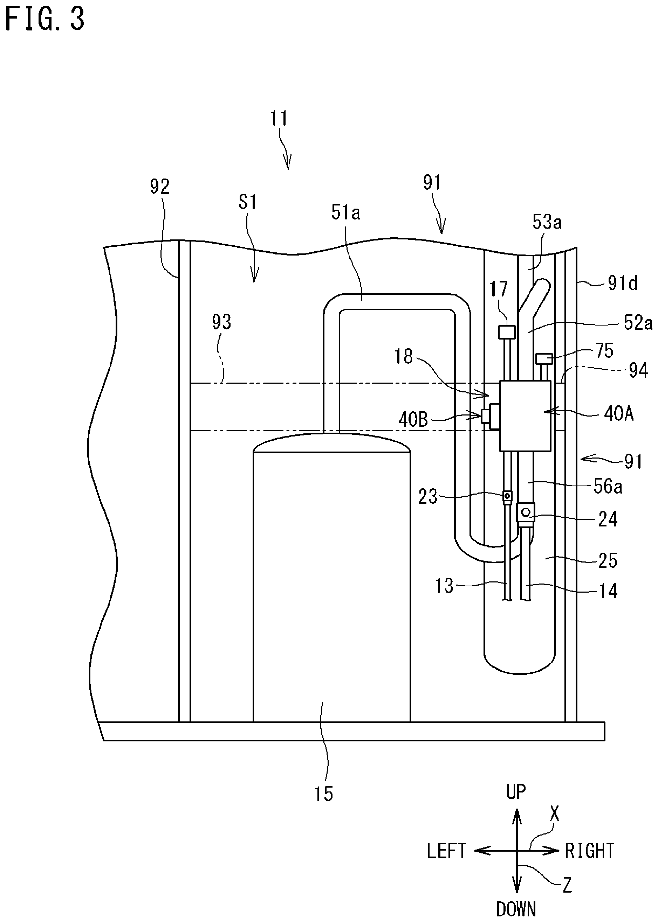

FIG. 2 is a plan view of an interior of the outdoor unit. FIG. 3 is a front view of a machine chamber of the outdoor unit.

In the following description, a direction (first direction X) indicated by an arrow X in FIG. 2 and FIG. 3 is a left-right direction, a direction (second direction Y) indicated by an arrow Y is a front-rear direction, and a direction (third direction Z) indicated by an arrow Z is an up-down direction. However, the directions indicated by these arrows X, Y, and Z are merely examples and can be changed as appropriate.

The outdoor unit 11 includes a casing 91. The casing 91 has a rectangular parallelepiped shape and has a rectangular shape in plan view. The casing 91 has an interior provided with a partition wall 92 that partitions a machine chamber S1 and a heat exchange chamber S2. The machine chamber S1 houses the compressor 15. The machine chamber S1 houses, in addition to the compressor 15, the accumulator 25, the four-way switching valve 18, and the like.

The heat exchange chamber S2 of the casing 91 houses the outdoor heat exchanger 16, the outdoor fan 19, and the like. The outdoor heat exchanger 16 has an L shape in plan view. The outdoor heat exchanger 16 is disposed along two adjacent side walls (a rear side wall 91a and a left side wall 91b) of the casing 91 disposed in the heat exchange chamber S2. The side walls 91a and 91b are provided with air inlets 91a1 and 91b1, respectively. The outdoor fan 19 is disposed facing a side wall (front side wall) 91c adjacent to the side wall (left side wall) 91b provided with the air inlet 91b1. The side wall 91c is provided with an air blow-out port 91c1.

When the outdoor fan 19 is activated, air is taken into the casing 91 from the air inlets 91a1 and 91b1 and exhausted from the air blow-out port 91c1. An arrow a shown in FIG. 2 indicates a flow direction of the air taken into the casing 91.

As shown in FIG. 2 and FIG. 3, the four-way switching valve 18 is disposed in the machine chamber S1 in the casing 91 of the outdoor unit 11. Specifically, in the machine chamber S1, the four-way switching valve 18 is disposed near the side wall (front side wall) 91c and the side wall (right side wall) 91d adjacent to each other. In other words, the four-way switching valve 18 is disposed at a corner between the side walls 91c and 91d.

The four-way switching valve 18 is fixed to the casing 91 by attachment members 93 and 94. The attachment member 93 has, for example, a band plate shape, and has one end in a longitudinal direction fixed to the four-way switching valve 18 and the other end fixed to the partition wall 92 of the casing 91. The attachment member 94 has, for example, one end fixed to the side wall (right side wall) 91d of the casing 91 and the other end fixed to the four-way switching valve 18. Therefore, the four-way switching valve 18 is attached between the side wall 91d and the partition wall 92 of the casing 91 in the left-right direction X via the attachment members 93 and 94. The four-way switching valve 18 is disposed on the right side (one side in the first direction X) of the compressor 15 and on the front side (one side in the second direction Y) of the accumulator 25.

One end of each of the refrigerant pipes 51a, 52a, 53a, and 56a is connected to the four-way switching valve 18 according to the present embodiment. The other end of the refrigerant pipe (discharge pipe) 51a is connected to the discharge side of the compressor 15. The other end of the refrigerant pipe (suction pipe) 52a is connected to the accumulator 25. The other end of the refrigerant pipe 53a is connected to the outdoor heat exchanger 16. The other end of the refrigerant pipe 56a is connected to the shutoff valve 24.

### (Flow path switching valve)

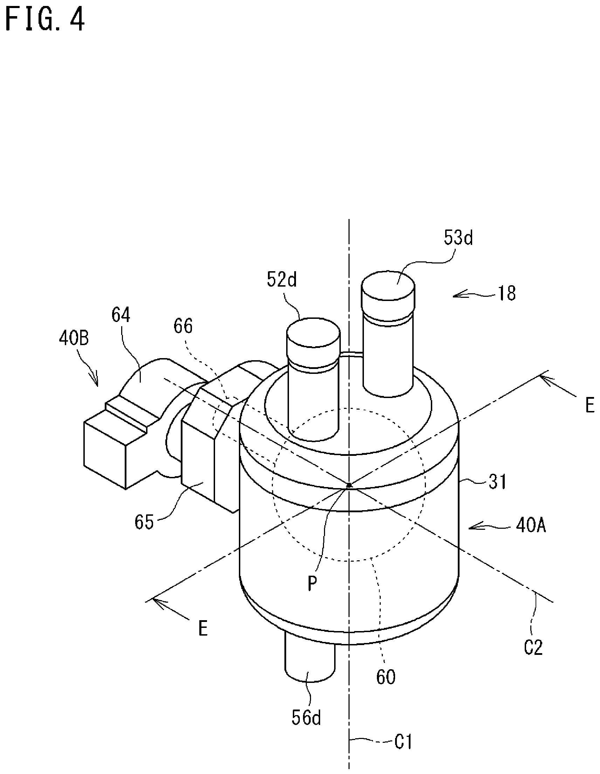

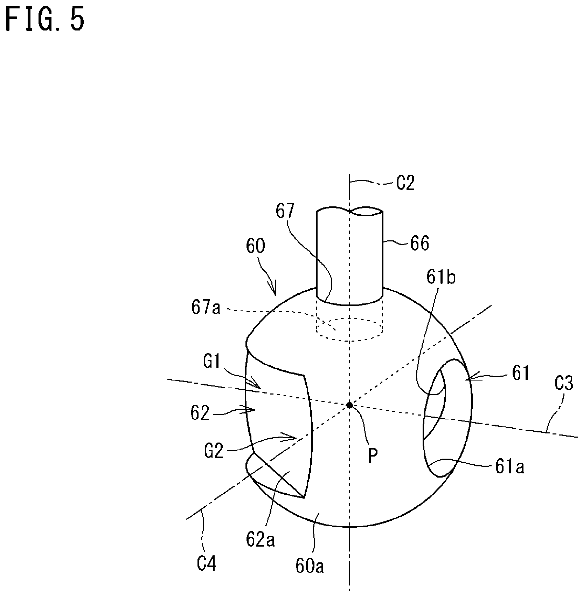

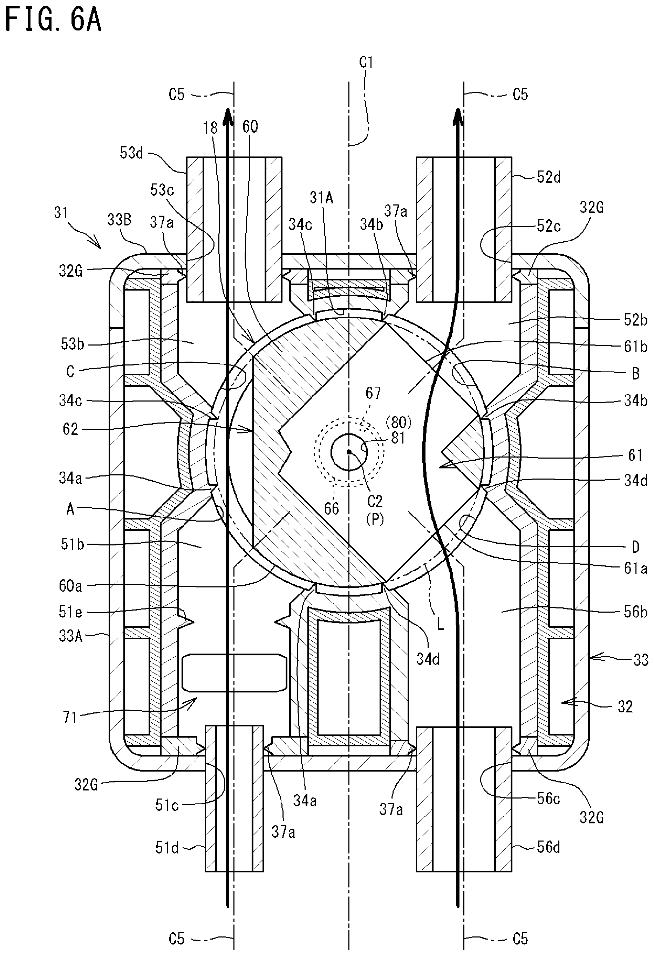

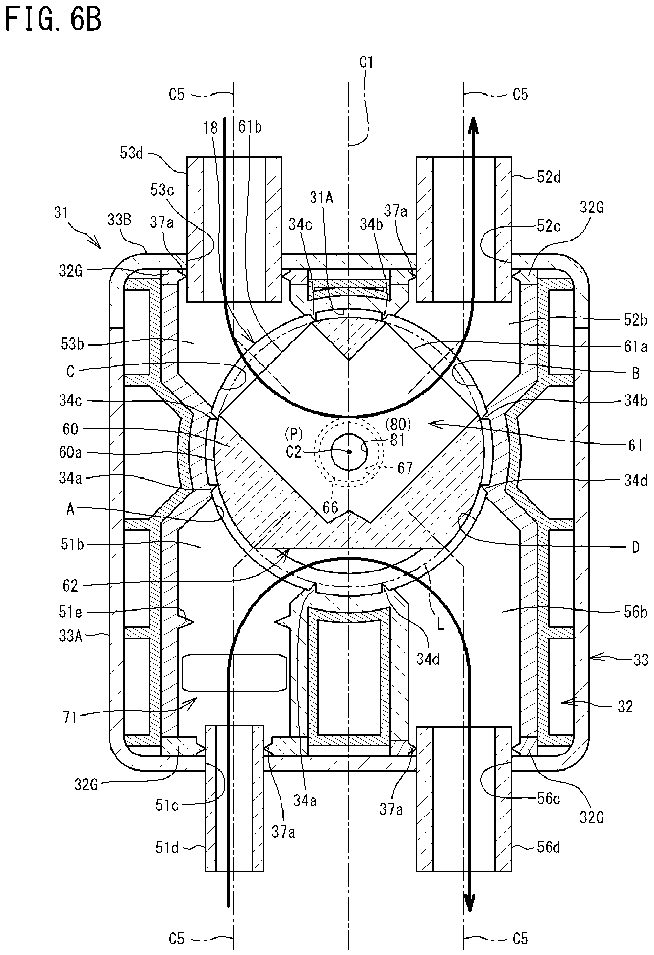

FIG. 4 is a perspective view of the flow path switching valve. FIG. 5 is a perspective view of a valve element of the flow path switching valve and a drive shaft. FIG. 6A is a sectional view taken along line E-E in FIG. 4 for describing an action of the flow path switching valve in the first mode. FIG. 6B is a sectional view taken along line E-E in FIG. 4 for describing an action of the flow path switching valve in the second mode.

As shown in FIG. 4, the flow path switching valve 18 according to the present embodiment includes a valve body 40A and a drive mechanism 40B. The valve body 40A has a substantially cylindrical shape as a whole. A center axis line C1 of the cylindrical shape of the valve body 40A is oriented in the up-down direction. Therefore, the "up-down direction" in the following description of the valve body 40A means a direction along the center axis line C1. The drive mechanism 40B is provided on an outer peripheral surface of the valve body 40A.

As also shown in FIG. 6A and FIG. 6B, the valve body 40A includes a housing 31 and a valve element 60. The housing 31 has a substantially cylindrical outer shape. The housing 31 includes a flow path portion 32 made of synthetic resin and a casing 33 made of metal. In the flow path portion 32, the plurality of refrigerant flow paths 51b, 52b, 53b, 56b, and 31A is formed. The refrigerant flow path 31A substantially constitutes a "valve chamber" in which the valve element 60 is housed, and the refrigerant flows through passages 61 and 62 formed in the valve element 60. The refrigerant flow paths 51b, 52b, 53b, and 56b are denoted by the same reference signs as the refrigerant flow paths in FIG. 1.

The flow path portion 32 of the housing 31 is formed with a synthetic resin. The flow path portion 32 is formed by die molding such as injection molding. As a material of the flow path portion 32, PA66 (polyamide 66), PPS (polyphenylene sulfide), PBT (polybutylene terephthalate), or the like is adopted.

One end of each of the refrigerant flow paths 51b, 52b, 53b, and 56b communicates with the valve chamber 31A, and the other end is opened on the surface of the flow path portion 32. In particular, the refrigerant flow paths 51b and 56b have upper ends communicating with the valve chamber 31A and lower ends opening on a lower surface of the flow path portion 32. The refrigerant flow paths 52b and 53b have lower ends communicating with the valve chamber 31A and upper ends opening on an upper surface of the flow path portion 32.

The casing 33 covers the outside of the flow path portion 32. The casing 33 has a substantially cylindrical shape with both ends in an axial direction closed. The casing 33 is constituted by two constituent members 33A and 33B divided at the middle in the axial direction of the cylindrical shape. The casing 33 is formed with an iron and steel material. For example, the casing 33 is formed with stainless steel. Each of the constituent members 33A and 33B of the casing 33 is formed by metal working such as sheet metal working or press working. For example, each of the constituent members 33A and 33B is formed by drawing. However, a material and a manufacturing method of the casing 33 are not limited to those described above. For example, the casing 33 may be formed with another iron and steel material such as iron, a material containing aluminum as a main component (pure aluminum or aluminum alloy), or the like.

The two constituent members 33A and 33B of the casing 33 are joined by welding. Specifically, the two constituent members 33A and 33B of the casing 33 are joined by welding that involves melting of a base material. The two constituent members 33A and 33B are closely joined so that the refrigerant does not leak from between the constituent members. The casing 33 protects the flow path portion 32 by covering the outside of the flow path portion 32. The casing 33 compensates the pressure resistance of the flow path portion 32 against the pressure applied from the refrigerant in the refrigerant flow paths 51b, 52b, 53b, 56b, and 31A. The casing 33 prevents the refrigerant leaking from the flow path portion 32 from leaking to the outside.

The valve element 60 of the four-way switching valve 18 is housed in the housing 31. Therefore, the housing 31 also functions as the casing of the valve element 60 in the four-way switching valve 18. Specifically, the flow path portion 32 of the housing 31 functions as an inner casing of the valve element 60, and the casing 33 of the housing 31 functions as an outer casing of the valve element 60.

The housing 31 includes the plurality of coupling pipes 51d, 52d, 53d, and 56d provided on an upper surface and a lower surface of the casing 33. These coupling pipes 51d, 52d, 53d, and 56d are inserted into openings 51c, 52c, 53c, and 56c formed in the upper surface and the lower surface of the casing 33, and are fixed to the casing 33 by welding or the like. For example, the coupling pipes 51d, 52d, 53d, and 56d are joined to the casing 33 by brazing, which is a type of welding that does not involve melting of the base material. Ends of the coupling pipes 51d, 52d, 53d, and 56d are also inserted into the refrigerant flow paths 51b, 52b, 53b, and 56b.

The coupling pipes 51d, 52d, 53d, and 56d according to the present embodiment are formed with a material containing copper as a main component (copper alloy, pure copper, or the like). However, the material of the coupling pipes 51d, 52d, 53d, and 56d is not limited thereto, and may be formed with a material containing aluminum as a main component or another material such as stainless steel.

The valve chamber 31A in which the valve element 60 is housed has a spherical shape. A plurality of ports (openings) A, B, C, and D is formed on an inner surface of the valve chamber 31A. These ports A to D correspond to the ports A to D described with reference to FIG. 1. The two ports B and C are disposed above the valve chamber 31A, and the two ports A and D are disposed below the valve chamber 31A.

In the housing 31, the refrigerant flow paths 51b, 52b, 53b, and 56b communicating with each of the ports A to D are formed.

The refrigerant flow path 51b communicating with the port A extends substantially downward from the port A. An end (upper end) of the coupling pipe 51d is inserted into the lower end of the refrigerant flow path 51b. The refrigerant pipe 51a (see FIG. 1) is connected to the coupling pipe 51d.

The refrigerant flow path 51b has an annular protrusion 51e in the middle of the refrigerant flow path 51b. The check valve 71 is housed in the refrigerant flow path 51b below the protrusion 51e. The check valve 71 is a non-electric component incorporated in the refrigerant flow path 51b. The check valve 71 restricts the flow of the refrigerant from the valve element 60 to the coupling pipe 51d, and allows the reverse flow of the refrigerant. The check valve 71 is a functional component that functions for the refrigerant flowing through the refrigerant flow path 51b. A specific structure of the check valve 71 is not limited, and a known structure can be adopted.

The refrigerant flow path 52b communicating with the port B extends substantially upward from the port B. An end (lower end) of the coupling pipe 52d is inserted into the upper end of the refrigerant flow path 52b. The refrigerant pipe 52a (see FIG. 1) is connected to the coupling pipe 52d.

The refrigerant flow path 53b communicating with the port C extends substantially upward from the port C. An end (lower end) of the coupling pipe 53d is inserted into the upper end of the refrigerant flow path 53b. The refrigerant pipe 53a (see FIG. 1) is connected to the coupling pipe 53d.

The refrigerant flow path 56b communicating with the port D extends substantially downward from the port D. An end (upper end) of the coupling pipe 56d is inserted into the lower end of the refrigerant flow path 56b. The refrigerant pipe 56a (see FIG. 1) is connected to the coupling pipe 56d.

The flow path portion 32 of the housing 31 includes a seal member 32G at an end of the refrigerant flow paths 51b, 52b, 53b, and 56b opposite to the valve chamber 31A side, and the ends of the coupling pipes 51d, 52d, 53d, and 56d are also inserted into the seal member 32G. The seal member 32G suppresses leakage of the refrigerant from between the refrigerant flow paths 51b, 52b, 53b, and 56b and the coupling pipes 51d, 52d, 53d, and 56d by bringing an inner peripheral portion 37a of the seal member 32G into contact with the coupling pipes 51d, 52d, 53d, and 56d.

The valve element 60 has a spherical shape as shown in FIG. 5, FIG. 6A, and FIG. 6B. The valve element 60 is disposed in the valve chamber 31A of the housing 31. An outer diameter of the valve element 60 is formed to be slightly smaller than an inner diameter of the inner surface of the valve chamber 31A.

The valve element 60 is made of metal or synthetic resin. The valve element 60 is manufactured by, for example, die molding such as die casting or injection molding. As a material of the valve element 60, for example, a material containing aluminum as a main component, such as an aluminum alloy or pure aluminum, a steel material such as high carbon chromium bearing steel (SUJ2), or a synthetic resin such as polyamide 66 (PA66) or polyphenylene sulfide (PPS) is adopted. However, the material and manufacturing method of the valve element 60 are not limited to the above.

As shown in FIG. 4, the valve element 60 rotates about a predetermined axis C2. The axis C2 of the valve element 60 passes through a center P of the spherical shape of the valve element 60. The axis C2 is set at a constant position, and the valve element 60 rotates at a constant position.

A drive shaft 66 is disposed on the axis C2. The drive shaft 66 constitutes the drive mechanism 40B. The drive shaft 66 is disposed on the axis C2, and has one end coupled to the valve element 60. Specifically, as shown in FIG. 5, a shaft hole 67 is formed in the valve element 60, and one end of the drive shaft 66 is inserted into the shaft hole 67. Therefore, the portion of the valve element 60 where the shaft hole 67 is formed constitutes a coupling portion to which the drive shaft 66 is coupled. The shaft hole 67 is a bottomed hole having a bottom portion 67a. A gap through which the refrigerant can flow is formed between an inner peripheral surface of the shaft hole 67 and an outer peripheral surface of the drive shaft 66.

The other end of the drive shaft 66 protrudes from an outer peripheral surface of the housing 31 of the valve body 40A and is connected to a decelerator 65 and a drive unit 64 constituting the drive mechanism 40B. The drive shaft 66 according to the present embodiment is disposed in a horizontal direction orthogonal to the center axis line C1 of the valve body 40A.

The drive unit 64 is, for example, an electric motor. The drive unit 64 generates and outputs rotational power. As the drive unit 64, an electric motor capable of adjusting a rotational angle, such as a stepping motor, is adopted. The decelerator 65 decelerates the rotational power of the drive unit 64 and transmits the rotational power to the drive shaft 66. The decelerator 65 is configured by, for example, a plurality of deceleration gears. The drive mechanism 40B is also an operation mechanism that rotationally operates the valve element 60 by rotationally driving the drive shaft 66.

FIG. 5 shows a reference axis C3 orthogonal to the axis C2 of the valve element 60 and a reference axis C4 orthogonal to the axis C2 and the reference axis C3. The axis C2, the reference axis C3, and the reference axis C4 are orthogonal to each other at a center P of the spherical shape of the valve element 60.

A through hole 61 and a concave portion 62 are formed in the valve element 60. The through hole 61 and the concave portion 62 both constitute a passage for the refrigerant. The through hole 61 is a hole penetrating the valve element 60. On the other hand, the concave portion 62 has a shape in which an outer surface 60a of the valve element 60 is recessed.

The through hole 61 opens at two positions on the outer surface 60a of the valve element 60. One opening 61a of the through hole 61 is formed on the reference axis C3. The other opening 61b is formed on the reference axis C4. Therefore, as shown in FIG. 6A and FIG. 6B, the through hole 61 has a shape bent in a substantially L shape. The areas of both the openings 61a and 61b are the same. A sectional area of the through hole 61 (an area of a cross section orthogonal to a center line of the through hole 61; a cross-sectional area) is substantially the same as the area of each of the openings 61a and 61b.

The concave portion 62 is formed in a range (range of about 90° about the axis C2) extending between a position G1 disposed on an opposite side of one opening 61a of the through hole 61 on the reference axis C3 and a position G2 disposed on an opposite side of the other opening 61b of the through hole 61 on the reference axis C4 on the outer surface 60a of the valve element 60.

A bottom surface 62a of the concave portion 62 is one flat surface. The bottom surface 62a is formed across the position G1 and the position G2. The bottom surface 62a may be constituted by a plurality of flat surfaces or may be constituted by a curved surface. The bottom surface 62a of the concave portion 62 and the openings 61a and 61b of the through hole 61 are arranged at an angle of about 45°.

The valve element 60 is not a complete sphere due to the formation of the through hole 61 and the concave portion 62, and is a sphere in which a part of a spherical surface (outer surface 60a) is missing. In FIG. 6A and FIG. 6B, the shape of a complete sphere without a missing part is indicated by an imaginary line L.

### (Switching of flow path by valve element 60)

In the present embodiment, the valve element 60 is switched between the first mode (see FIG. 6A) and the second mode (see FIG. 6B) by rotating by 90° about the axis C2.

In the first mode shown in FIG. 6A, the port B and the port D are connected by the through hole 61 of the valve element 60, and the port A and the port C are connected by the concave portion 62. Therefore, as indicated by solid arrows in FIG. 1, the refrigerant discharged from the compressor 15 flows into the refrigerant flow path 51b of the four-way switching valve 18 through the refrigerant pipe 51a, passes through the port A, the concave portion 62 of the valve element 60, and the port C, flows out of the four-way switching valve 18 from the refrigerant flow path 53b, and is fed to the outdoor heat exchanger 16 through the refrigerant pipe 53a. The refrigerant flowing out of the indoor heat exchanger 21 flows into the refrigerant flow path 56b of the four-way switching valve 18 through the connection pipe 13 and the refrigerant pipe 56a, passes through the port D, the through hole 61 of the valve element 60, and the port B, flows out of the four-way switching valve 18 from the refrigerant flow path 52b, and is sucked into the compressor 15 through the refrigerant pipe 52a. Thus, the air conditioner 10 can execute the cooling operation.

In the second mode shown in FIG. 6B, the port B and the port C are connected by the through hole 61 of the valve element 60, and the port A and the port D are connected by the concave portion 62. Therefore, as indicated by dotted arrows in FIG. 1, the refrigerant discharged from the compressor 15 flows into the refrigerant flow path 51b of the four-way switching valve 18 through the refrigerant pipe 51a, passes through the port A, the concave portion 62 of the valve element 60, and the port D, flows out of the four-way switching valve 18 from the refrigerant flow path 56b, and is fed to the indoor heat exchanger 21 through the refrigerant pipe 56a and the connection pipe 13. The refrigerant flowing out of the outdoor heat exchanger 16 flows into the refrigerant flow path 53b of the four-way switching valve 18 through the refrigerant pipe 53a, passes through the port C, the through hole 61 of the valve element 60, and the port B, flows out of the four-way switching valve 18 from the refrigerant flow path 52b, and is sucked into the compressor 15 through the refrigerant pipe 52a. Thus, the air conditioner 10 can execute the heating operation.

The through hole 61 of the valve element 60 always communicates with the port B, and selectively communicates with the port D and the port C by the valve element 60 rotating by 90° about the axis C2. Since the port B is connected to the suction pipe 52a and the refrigerant flow path 52b of the compressor 15, the through hole 61 always communicating with the port B serves as a passage through which a "low-pressure refrigerant" flows.

The concave portion 62 always communicates with the port A, and selectively communicates with the port C and the port D by the valve element 60 rotating by 90° about the axis C2. Since the port A is connected to the discharge pipe 51a and the refrigerant flow path 51b of the compressor 15, the concave portion 62 always communicating with the port A serves as a passage through which a "high-pressure refrigerant" flows.

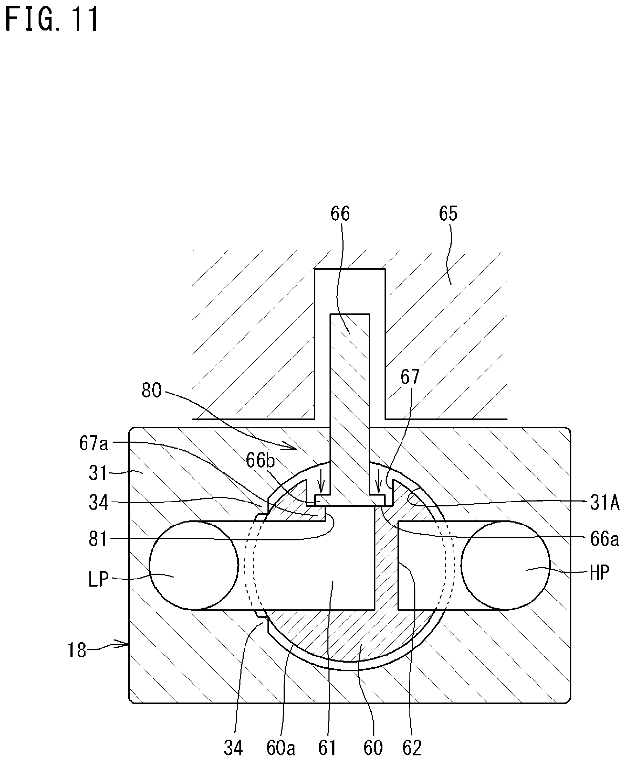

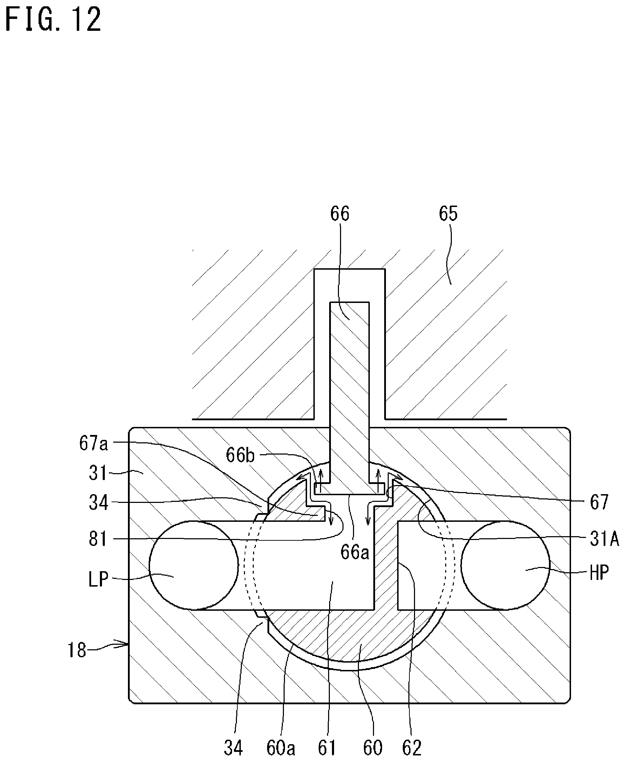

The refrigerant flow paths 51b, 53b, and 56b of the flow path portion 32 can also be referred to as high-pressure refrigerant flow paths HP (see FIG. 11 and FIG. 12) because the high-pressure refrigerant flows therethrough, and the refrigerant flow paths 52b, 53b, and 56b can also be referred to as low-pressure refrigerant flow paths LP (see FIG. 11 and FIG. 12) because the low-pressure refrigerant flows therethrough. The refrigerant flow paths 53b and 56b can become both a high-pressure refrigerant flow path and a low-pressure refrigerant flow path by switching the valve element 60.

As shown in FIG. 6A and FIG. 6B, seal portions 34a, 34b, 34c, and 34d are integrally formed on the inner surface of the valve chamber 31A of the housing 31 and around the ports A to D, respectively. For example, the seal portions 34a to 34d are formed integrally with the flow path portion 32 when the flow path portion 32 is molded with a die by injection molding, die casting, or the like. The seal portions 34a to 34d are annular protrusions protruding from the inner surface of the valve chamber 31A. Distal ends of the seal portions 34a to 34d are in contact with the outer surface 60a of the valve element 60. The seal portions 34a to 34d according to the present embodiment have a circular annular shape substantially along the peripheries of the cylindrical refrigerant flow paths 51b, 52b, 53b, and 56b. However, the seal portions 34a to 34d may have an annular shape such as a square shape.

Specifically, in the first mode shown in FIG. 6A, the seal portion 34b formed around the port B on the inner surface of the valve chamber 31A is in contact with the periphery of the opening 61b of the through hole 61 on the outer surface 60a of the valve element 60. The seal portion 34d formed around the port D on the inner surface of the valve chamber 31A is in contact with the periphery of the opening 61a of the through hole 61 on the outer surface 60a of the valve element 60.

Therefore, the seal portions 34b and 34d suppress leakage of the low-pressure refrigerant flowing through the port B, the port D, and the through hole 61 into a gap between the outer surface 60a of the valve element 60 and the inner surface of the valve chamber 31A. Furthermore, the seal portions 34b and 34d prevent the refrigerant (high-pressure refrigerant) flowing through portions other than the port B, the port D, and the through hole 61 from flowing into the port B, the port D, and the through hole 61. Accordingly, mixing of the low-pressure refrigerant and the high-pressure refrigerant can be suppressed.

On the other hand, the seal portions 34a and 34c formed around the port A and the port C on the inner surface of the valve chamber 31A are partially in contact with the periphery of the concave portion 62 on the outer surface 60a of the valve element 60, but the other portions are positioned on a radially outer side of the concave portion 62 and are not in contact with the outer surface 60a of the valve element 60. Therefore, the concave portion 62 and the valve chamber 31A communicate with each other, and the high-pressure refrigerant flowing through the port A, the port C, and the concave portion 62 leaks into the gap between the outer surface 60a of the valve element 60 and the inner surface of the valve chamber 31A.

When the high-pressure refrigerant leaks into the gap between the outer surface 60a of the valve element 60 and the inner surface of the valve chamber 31A, the pressure of the high-pressure refrigerant is applied to most of the outer surface 60a of the valve element 60 except for the openings 61a and 61b of the through hole 61. The pressure of the high-pressure refrigerant is also applied to the inside of the concave portion 62 through which the high-pressure refrigerant passes. Therefore, the outer surface 60a of the valve element 60 is strongly pressed against the seal portions 34b and 34d formed around the port B and the port D.

Accordingly, the seal portions 34b and 34d can further suppress leakage of the low-pressure refrigerant flowing through the port B, the port D, and the through hole 61 into a gap between the outer surface 60a of the valve element 60 and the inner surface of the valve chamber 31A. Furthermore, the seal portions 34b and 34d can further suppress the inflow of the high-pressure refrigerant flowing through portions other than the port B, the port D, and the through hole 61, in other words, the high-pressure refrigerant flowing through the port A, the port C, and the concave portion 62, and the high-pressure refrigerant leaking from these portions into the port B, the port D, and the through hole 61.

In the second mode shown in FIG. 6B, the seal portion 34b formed around the port B on the inner surface of the valve chamber 31A is in contact with the periphery of the opening 61a of the through hole 61 on the outer surface 60a of the valve element 60. The seal portion 34c formed around the port C on the inner surface of the valve chamber 31A is in contact with the periphery of the opening 61b of the through hole 61 on the outer surface 60a of the valve element 60.

Therefore, the seal portions 34b and 34c suppress leakage of the low-pressure refrigerant flowing through the port B, the port C, and the through hole 61 into a gap between the outer surface 60a of the valve element 60 and the inner surface of the valve chamber 31A. Furthermore, the seal portions 34b and 34c prevent the refrigerant (high-pressure refrigerant) flowing through portions other than the port B, the port C, and the through hole 61 from flowing into the port B, the port C, and the through hole 61. Accordingly, mixing of the low-pressure refrigerant and the high-pressure refrigerant can be suppressed.

On the other hand, the seal portions 34a and 34d formed around the port A and the port D on the inner surface of the valve chamber 31A are partially in contact with the periphery of the concave portion 62 on the outer surface 60a of the valve element 60, but the other portions are positioned on a radially outer side of the concave portion 62 and are not in contact with the outer surface 60a of the valve element 60. Therefore, the refrigerant flowing through the port A, the port D, and the concave portion 62 leaks into the gap between the outer surface 60a of the valve element 60 and the inner surface of the valve chamber 31A.

When the high-pressure refrigerant leaks into the gap between the outer surface 60a of the valve element 60 and the inner surface of the valve chamber 31A, the pressure of the high-pressure refrigerant is applied to most part of the outer surface 60a of the valve element 60 except for the through hole 61 and to the inside of the concave portion 62 through which the high-pressure refrigerant passes. Therefore, the valve element 60 is strongly pressed against the seal portions 34b and 34c formed around the port B and the port C.

Accordingly, the seal portions 34b and 34c can further suppress leakage of the low-pressure refrigerant flowing through the port B, the port C, and the through hole 61 into a gap between the outer surface 60a of the valve element 60 and the inner surface of the valve chamber 31A. Furthermore, the seal portions 34b and 34c can further suppress the inflow of the high-pressure refrigerant flowing through portions other than the port B, the port C, and the through hole 61, in other words, the high-pressure refrigerant flowing through the port A, the port D, and the concave portion 62, and the high-pressure refrigerant leaking from these portions into the port B, the port C, and the through hole 61.

The seal portions 34a to 34d are formed integrally with the flow path portion 32. Therefore, the number of components can be reduced as compared with a case where the seal portions 34a to 34d are formed separately from the flow path portion 32. Since the flow path portion 32 is molded with a metal die with a synthetic resin or the like, the seal portions 34a to 34d can be easily integrally molded.

Since only the high-pressure refrigerant flows through the port A of the four ports A to D, the seal portion 34a formed around the port A is not substantially used. Therefore, the seal portion 34a may be omitted.

As described above, in the four-way switching valve 18, when the high-pressure refrigerant leaks into the gap between the outer surface 60a of the valve element 60 and the inner surface of the valve chamber 31A, the pressure of the high-pressure refrigerant is applied to most of the outer surface 60a of the valve element 60 except the through hole 61 and the inside of the concave portion 62 through which the high-pressure refrigerant passes, and the valve element 60 is strongly pressed against the seal portions 34b to 34d formed around the ports B to D. Therefore, when the valve element 60 of the four-way switching valve 18 is switched between a first orientation and a second orientation, the valve element 60 is required to be rotated with high torque. The four-way switching valve 18 according to the present embodiment includes a pressure equalizing mechanism 80 in order to reduce a rotational torque of the valve element 60.

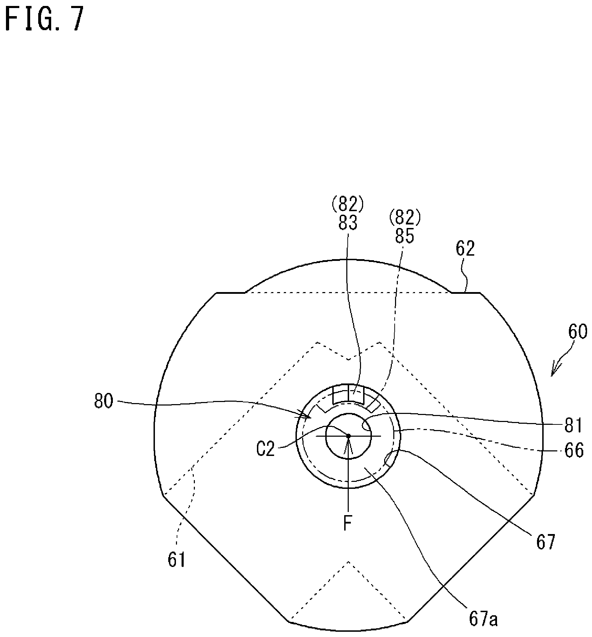

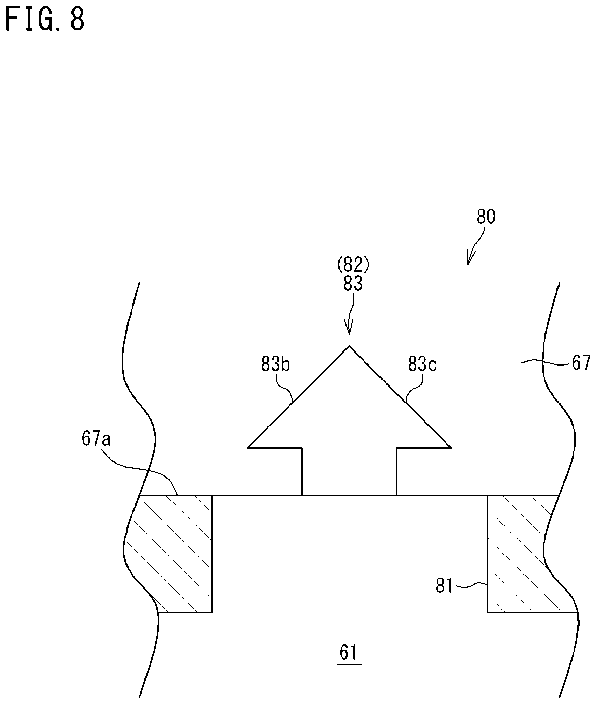

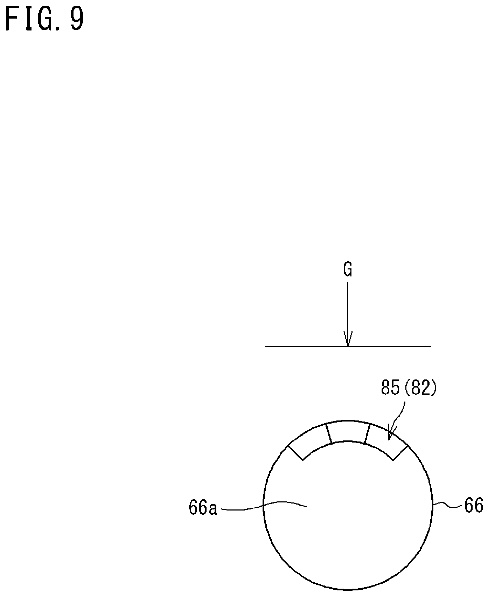

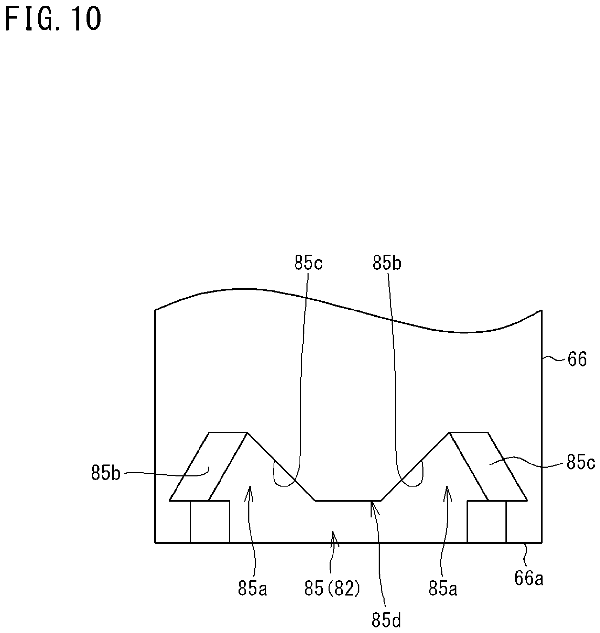

FIG. 7 is a front view of the valve element. FIG. 8 is a fragmentary view in the direction of arrow F in FIG. 7. FIG. 9 is a front view showing an end surface of the drive shaft on the valve element side. FIG. 10 is a fragmentary view in the direction of arrow G in FIG. 9.

As shown in FIG. 6A, FIG. 6B, FIG. 7, and FIG. 8, the pressure equalizing mechanism 80 according to the present embodiment includes a pressure equalizing flow path 81 formed in the valve element 60. The pressure equalizing flow path 81 connects the through hole (first passage) 61 of the valve element 60 and the valve chamber 31A. Specifically, the pressure equalizing flow path 81 is formed so as to penetrate the bottom portion 67a of the shaft hole 67 into which the drive shaft 66 is inserted, and communicates the shaft hole 67 and the through hole 61 to each other. The pressure equalizing flow path 81 is formed along the axis C2 of the valve element 60. The pressure equalizing flow path 81 is closed by the end surface 66a of the drive shaft 66 inserted into the shaft hole 67.

As shown in FIG. 7 to FIG. 10, the pressure equalizing mechanism 80 includes an opening and closing mechanism 82 that opens and closes the pressure equalizing flow path 81. The opening and closing mechanism 82 opens and closes the pressure equalizing flow path 81 by moving the drive shaft 66 in the axial direction.

FIG. 11 is a schematic explanatory diagram of the flow path switching valve showing a state in which the pressure equalizing mechanism is not acting. FIG. 12 is a schematic explanatory diagram of the flow path switching valve showing a state in which the pressure equalizing mechanism is acting.

As shown in FIG. 11, when the valve element 60 is in the first orientation or the second orientation and the cooling operation or the heating operation is performed, the pressure equalizing flow path 81 constituting the pressure equalizing mechanism 80 is closed by the end surface 66a of the drive shaft 66. Therefore, the through hole (first passage) 61 of the valve element 60 through which the low-pressure refrigerant flows, the concave portion (second passage) 62 of the valve element 60 through which the high-pressure refrigerant flows, and the gap between the inner surface of the valve chamber 31A where the high-pressure refrigerant exists and the outer surface 60a of the valve element 60 are defined by the seal portion 34 (corresponding to the seal portions 34b to 34d in FIG. 6A and FIG. 6B). Thus, the mixing of the low-pressure refrigerant and the high-pressure refrigerant is suppressed.

In a case where the valve element 60 is rotated between the first orientation and the second orientation in order to switch between the cooling operation and the heating operation, the opening and closing mechanism 82 moves the drive shaft 66 in the axial direction so that the end surface of the drive shaft 66 is separated from the bottom portion 67a of the shaft hole 67 to open the pressure equalizing flow path 81 as shown in FIG. 12. Since a gap through which the refrigerant can flow is formed between an outer peripheral surface of the drive shaft 66 and an inner peripheral surface of the shaft hole 67, the pressure equalizing flow path 81 connects the inside of the valve chamber 31A and the through hole 61. As a result, the high-pressure refrigerant existing between the inner surface of the valve chamber 31A and the outer surface 60a of the valve element 60 also enters the through hole 61 via the pressure equalizing flow path 81, and the high-pressure refrigerant and the low-pressure refrigerant are mixed to be balanced in pressure. As a result, it is possible to reduce the rotational torque for rotating the valve element 60 between the first orientation and the second orientation.

In the example shown in FIG. 11 and FIG. 12, a disk-shaped flange 66b protruding in a radial direction is formed at an end of the drive shaft 66 inserted into the shaft hole 67. This flange can increase a contact area of the end surface 66a of the drive shaft 66 with the bottom portion 67a of the shaft hole 67. The pressure of the high-pressure refrigerant applied to the flange 66b can reliably close the pressure equalizing flow path 81 at the end surface 66a of the drive shaft 66. A hole penetrating in the axial direction may be formed in the flange 66b, and if the hole in the flange 66b is opened when the end surface 66a of the drive shaft 66 opens the pressure equalizing flow path 81, and the mixing of the high-pressure refrigerant and the low-pressure refrigerant can be promoted.

The opening and closing mechanism 82 does not rotate the valve element 60 until the pressure equalizing flow path 81 is opened. Hereinafter, a specific structure of the opening and closing mechanism 82 that achieves such an action will be described.

As shown in FIG. 9 and FIG. 10, the opening and closing mechanism 82 has a concave portion 85 formed on the outer peripheral surface of the drive shaft 66. The concave portion 85 is formed in a predetermined range in a circumferential direction of the drive shaft 66. The concave portion 85 is open at the end surface 66a of the drive shaft 66 and the outer peripheral surface of the drive shaft 66. Cam surfaces 85b and 85c are formed in the concave portion 85. The cam surfaces 85b and 85c face the bottom portion 67a of the shaft hole 67.

The positions of the cam surfaces 85b and 85c in the axial direction vary in the circumferential direction of the drive shaft 66. Specifically, the cam surfaces 85b and 85c include a cam surface 85b inclined in a direction away from the end surface 66a and a cam surface 85c inclined in a direction approaching the end surface 66a toward one side (for example, the right side in FIG. 10) in the circumferential direction of the drive shaft 66. These cam surfaces 85b and 85c are alternately arranged in the circumferential direction of the drive shaft 66. As a result, two mountain-shaped small concave portions 85a are formed by the adjacent cam surfaces 85b and 85c, and one intermediate protrusion 85d is formed between the two small concave portions 85a.

As shown in FIG. 7 and FIG. 8, the opening and closing mechanism 82 has a protrusion 83 formed in the shaft hole 67 of the valve element 60. The protrusion 83 protrudes radially inward from the inner peripheral surface of the shaft hole 67. One end of the protrusion 83 in the axial direction of the drive shaft 66 is connected to the bottom portion 67a of the shaft hole 67. The other end (distal end) of the protrusion 83 is formed in a mountain shape and has two inclined surfaces 83b and 83c inclined in opposite directions to each other. One 83b of the two inclined surfaces 83b and 83c is a surface substantially parallel to one cam surface 85b of the concave portion 85 in FIG. 10, and the other 83c of the two inclined surfaces 83b and 83c is a surface substantially parallel to the other cam surface 85c of the concave portion 85. The protrusion 83 functions as a cam receiver that comes into contact with the cam surfaces 85b and 85c and relatively moves along the cam surfaces 85b and 85c.

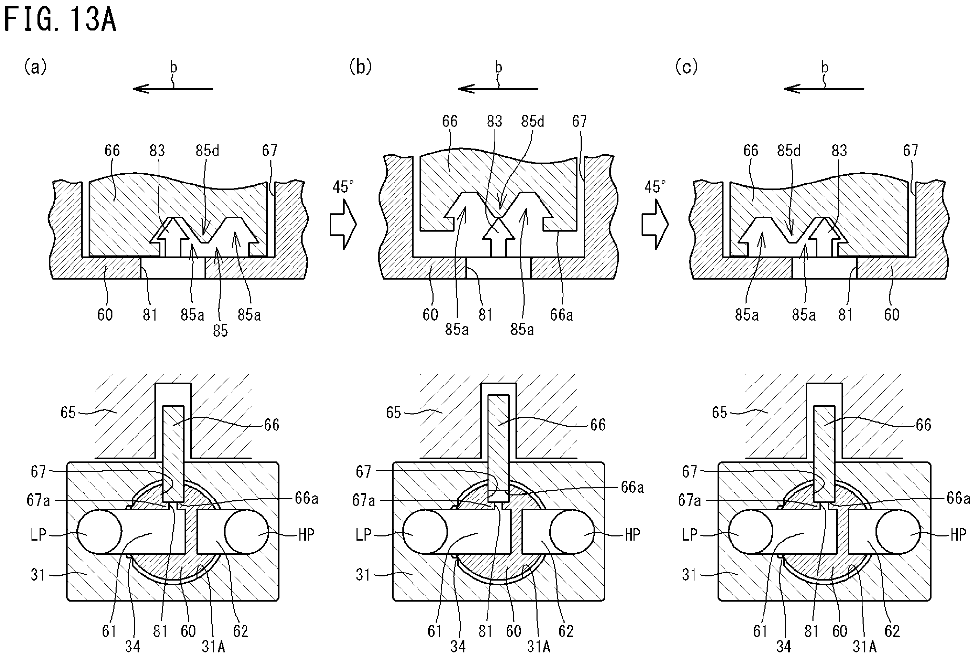

FIG. 13A is an explanatory diagram showing a flow of operation of the flow path switching valve. The flow path switching valve 18 operates in the order of (a) to (c) of FIG. 13A (or in the reverse order).

A circumferential width of the protrusion 83 formed in the shaft hole 67 of the valve element 60 is smaller than a circumferential width of the concave portion 85 of the drive shaft 66. When the valve element 60 is in the first orientation or the second orientation and the cooling operation or the heating operation is performed, the protrusion 83 is disposed in the one small concave portion 85a.

As shown in (a) to (c) of FIG. 13A, when the drive shaft 66 is rotated in the direction of arrow b by the drive unit 64 of the drive mechanism 40B, the concave portion 85 formed in the drive shaft 66 moves in the same direction b. As a result, the protrusion 83 of the shaft hole 67 relatively moves in a direction opposite to the direction of the arrow b in the concave portion 85. During this period, the drive shaft 66 idles with respect to the valve element 60 and does not rotate the valve element 60. During this period, as shown in (b) of FIG. 13A, the protrusion 83 of the shaft hole 67 passes through the intermediate protrusion 85d, and accordingly, the drive shaft 66 moves in the axial direction along the cam surfaces 85b and 85c. As a result, the end surface 66a of the drive shaft 66 is separated from the pressure equalizing flow path 81, and the pressure equalizing flow path 81 is opened.

As described above, the cam surfaces 85b and 85c and the protrusion (cam receiver) 83 constitute a converter that converts the rotation of the drive shaft 66 by the drive unit 64 into axial movement of the drive shaft 66. The cam surface as described above may be provided on the shaft hole 67 side, and the cam receiver may be provided on the drive shaft 66 side.

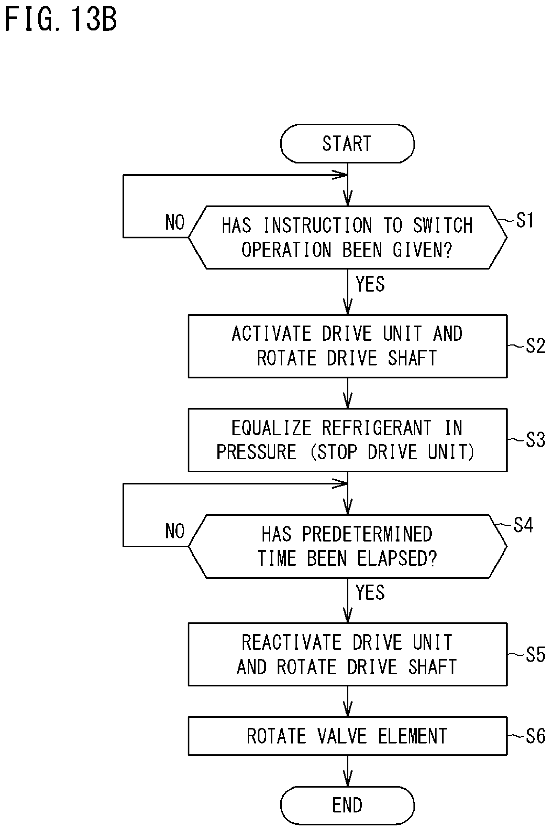

FIG. 13B is a flowchart showing a control procedure of the control unit related to switching of operation.

Hereinafter, the operation procedure of the four-way switching valve 18 including the control by the control unit 20 will be described.

When receiving an instruction to switch the operation, for example, an instruction to switch between the cooling operation and the heating operation, an instruction to switch between the heating operation and the defrost operation, or an instruction to switch between the heating operation and a stop to the heating operation (step S1), the control unit 20 activates the drive unit 64 (see FIG. 4) of the four-way switching valve 18 to rotate the drive shaft 66 in order to reverse the flow of the refrigerant in the refrigerant circuit 30 by rotating the valve element 60 (step S2). At this time, for example, the drive shaft 66 is rotated by 45° to shift the state of (a) to the state of (b) in FIG. 13A. Accordingly, the pressure equalizing flow path 81 is opened, and the refrigerant in the valve chamber 31A is equalized in pressure (step S3). In this state, the drive unit 64 is temporarily stopped.

The control unit 20 determines whether a predetermined time has elapsed (step S4). This predetermined time is a time during which the refrigerant in the valve chamber 31A can be sufficiently equalized to such an extent that the valve element 60 can be rotationally operated. When the predetermined time has elapsed, the control unit 20 actuates the drive unit 64 again to further rotate the drive shaft 66 by 45° and shift the state of (b) to the state of (c) in FIG. 13A (step S5). Thereafter, the control unit 20 further rotates the drive shaft 66 by 90° to switch the valve element 60 between the first orientation and the second orientation (step S6). Although the pressure equalizing flow path 81 is closed again in the state of (c) in FIG. 13A, the refrigerant in the valve chamber 31A is sufficiently equalized in pressure at that time, and thus, the valve element 60 can be rotated with low torque. Once the valve element 60 rotates, the through hole 61 of the valve element 60 communicates with the valve chamber 31A (the seal by the seal portion 34 is released) without using the pressure equalizing flow path 81, and thus, the valve element 60 can be rotated with low torque.

As described above, after receiving the instruction to switch the operation in step S1, the control unit 20 rotates the valve element 60 in step S6 through steps S2 to S5. Therefore, receiving the instruction to switch the operation by the control unit 20 is also receiving a signal to rotate the valve element 60.

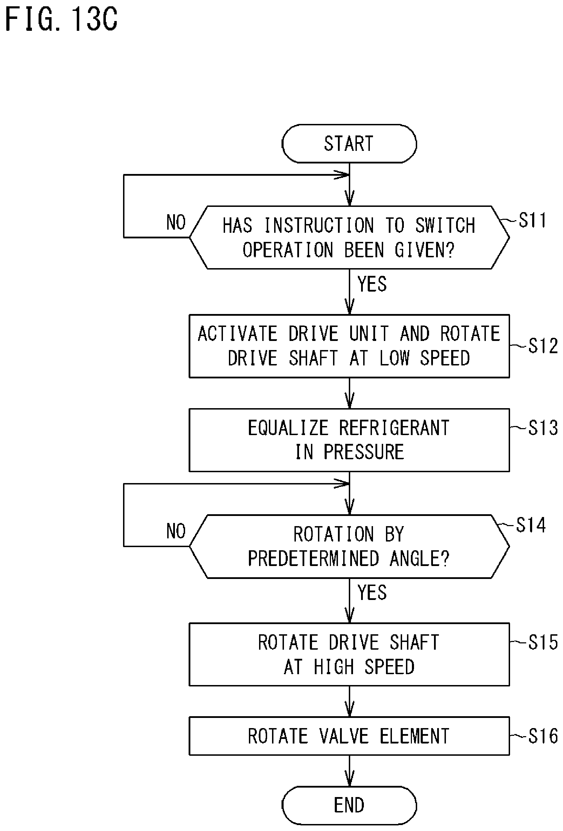

FIG. 13C is a flowchart showing a control procedure of the control unit related to switching of operation in a modification. In the embodiment shown in FIG. 13B, the drive unit 64 is temporarily stopped when a pressure equalizing operation is performed. On the other hand, the modification illustrated in FIG. 13C is an example in which the drive unit 64 is continuously operated without being stopped.

In this modification, when receiving the instruction to switch the operation (step S11), the control unit 20 activates the drive unit 64 to rotate the drive shaft 66 at a low speed (step S12). Accordingly, the pressure equalizing flow path 81 is opened, and the refrigerant in the valve chamber 31A is equalized in pressure (step S13). Thereafter, the control unit 20 determines whether the drive shaft 66 has rotated by a predetermined angle (step S14). The predetermined angle is an angle from the start of rotation of the drive shaft 66 and the opening of the pressure equalizing flow path 81 to the closing of the pressure equalizing flow path 81, and is a rotational angle (for example, 90°) from the state of (a) to the shifted state of (c) in FIG. 13A.

When the drive shaft 66 rotates by a predetermined angle, the control unit 20 increases a rotational speed of the drive shaft 66 (step S15), and switches the orientation of the valve element 60 between the first orientation and the second orientation by rotating the valve element 60 (step S16). In this modification, during the pressure equalizing operation, the drive shaft 66 is rotated at a low speed to sufficiently secure the time required for the pressure equalization, and when the pressure equalizing operation is finished, the drive shaft 66 is rotated at a high speed to quickly switch the orientation of the valve element 60, and the pressure equalizing operation to the rotation of the valve element 60 can be smoothly performed.

### [Embodiment 2]

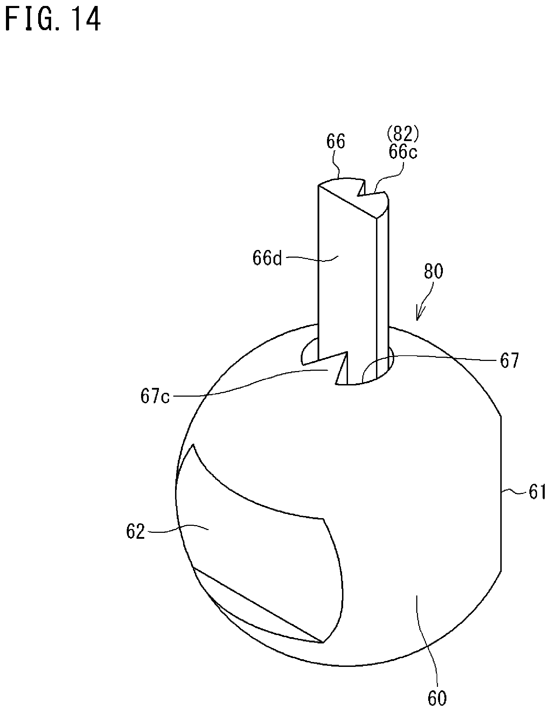

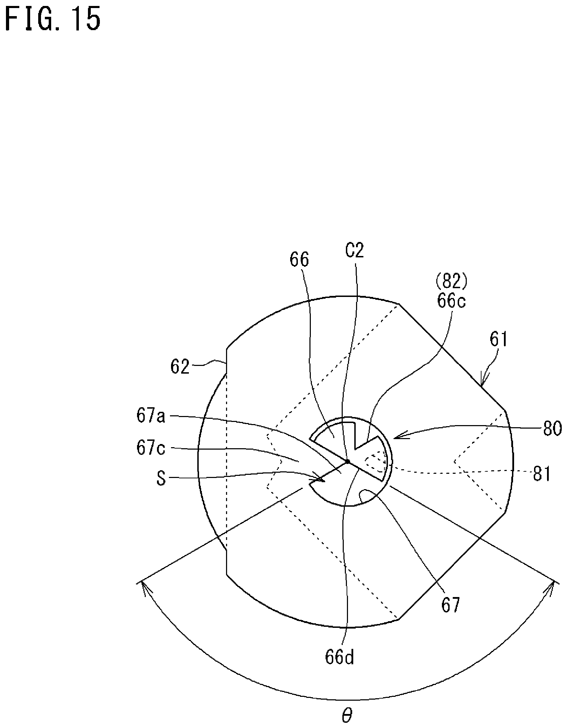

FIG. 14 is a perspective view showing the valve element and the drive shaft according to a second embodiment. FIG. 15 is a front view of the valve element and the drive shaft.

The pressure equalizing mechanism 80 of the second embodiment includes the pressure equalizing flow path 81 and the opening and closing mechanism 82. However, in the pressure equalizing mechanism 80 according to the second embodiment, the configuration of the opening and closing mechanism 82 is mainly different from that of the first embodiment.

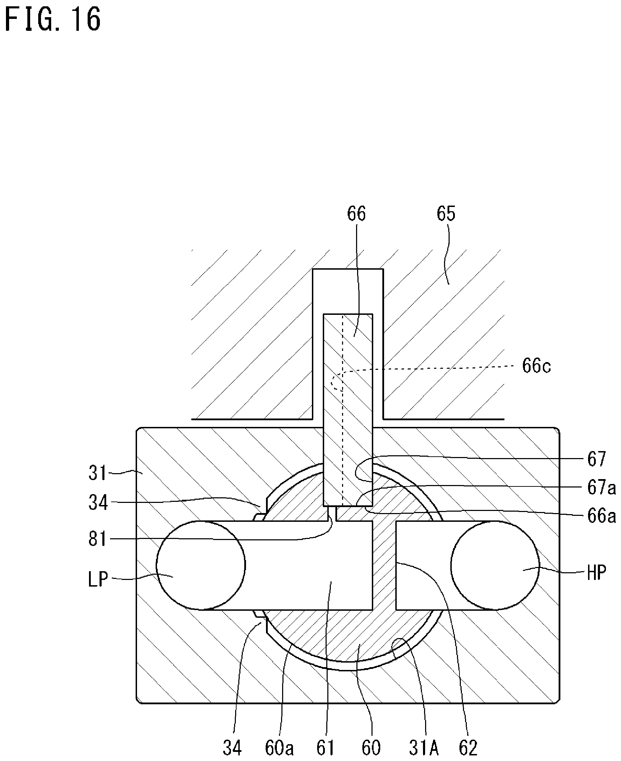

As shown in FIG. 15, as in the first embodiment, the pressure equalizing flow path 81 is formed in the bottom portion 67a of the shaft hole 67, and communicates the shaft hole 67 and the through hole 61 to each other. The pressure equalizing flow path 81 is disposed at a position shifted in the radial direction from the axis C2 of the valve element 60. The pressure equalizing flow path 81 is closed by the end surface 66a (see FIG. 16) of the drive shaft 66.

The opening and closing mechanism 82 according to the present embodiment opens and closes the pressure equalizing flow path 81 in the process of rotating the drive shaft 66 instead of moving the drive shaft 66 in the axial direction as in the first embodiment. Specifically, as shown in FIG. 14 and FIG. 15, the opening and closing mechanism 82 includes a communication path 66c formed in the drive shaft 66. The communication path 66c is a recessed groove partially formed in the circumferential direction of the drive shaft 66, and is formed over an entire length direction of the drive shaft 66.

The drive shaft 66 includes the communication path 66c and has a shape in which a part in the circumferential direction is missing. Specifically, the drive shaft 66 has a shape in which a half in the circumferential direction is missing. Therefore, the drive shaft 66 has a semicircular cross section and has a substantially flat side surface 66d.

The opening and closing mechanism 82 includes a rotation restrictor 67c formed in the shaft hole 67 of the valve element 60. The rotation restrictor 67c is a protruding portion protruding radially inward from an inner periphery of the shaft hole 67. The rotation restrictor 67c occupies (fills) a part of the shaft hole 67 in the circumferential direction. For example, as shown in FIG. 15, the rotation restrictor 67c occupies a range in which a central angle about the axis C2 is about 60° in the shaft hole 67. Therefore, the shaft hole 67 is substantially formed with a central angle in a range of about 300°, and the drive shaft 66 is inserted in a range of 180°. Therefore, a clearance S having a central angle θ of about 120° is formed in the shaft hole 67. The drive shaft 66 idles in the range of the clearance S and does not rotate the valve element 60. When the drive shaft 66 is rotated within the range of the clearance S and the communication path 66c is aligned with the pressure equalizing flow path 81, the pressure equalizing flow path 81 is opened.

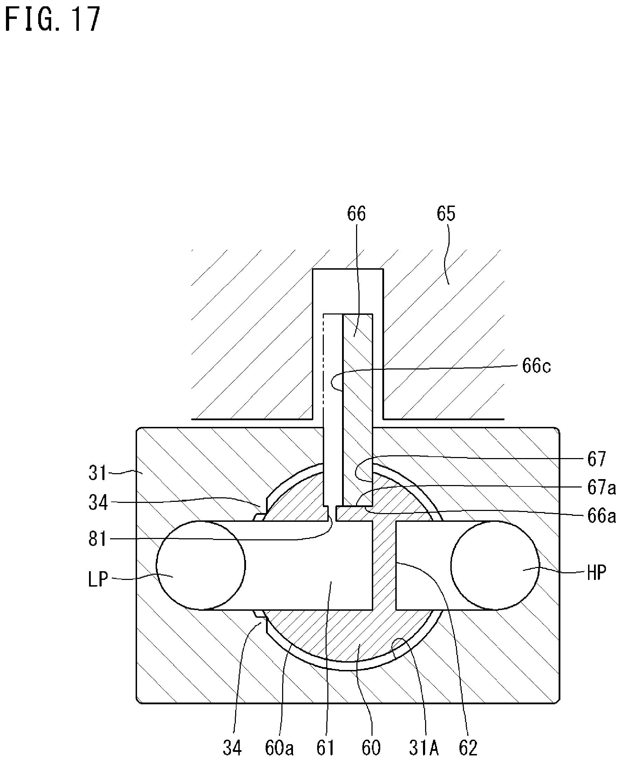

FIG. 16 is a schematic explanatory diagram of the flow path switching valve showing a state in which the pressure equalizing mechanism is not acting. FIG. 17 is a schematic explanatory diagram of the flow path switching valve showing a state in which the pressure equalizing mechanism is acting.

As shown in FIG. 16, when the valve element 60 is in the first orientation or the second orientation and the cooling operation or the heating operation is performed, the pressure equalizing flow path 81 constituting the pressure equalizing mechanism 80 is closed by the end surface 66a of the drive shaft 66. Therefore, the through hole (first passage) 61 of the valve element 60 through which the low-pressure refrigerant flows, the concave portion (second passage) 62 of the valve element 60 through which the high-pressure refrigerant flows, and the gap between the outer surface 60a of the valve element 60 through which the high-pressure refrigerant exists and the inner surface of the valve chamber 31A are defined by the seal portion 34. Thus, the mixing of the low-pressure refrigerant and the high-pressure refrigerant is suppressed.

In a case where the valve element 60 is rotated between the first orientation and the second orientation in order to switch the operation of the air conditioner 10, the opening and closing mechanism 82 rotates the drive shaft 66 so that the communication path 66c of the drive shaft 66 coincides with the pressure equalizing flow path 81 of the shaft hole 67 to open the pressure equalizing flow path 81. Accordingly, the pressure equalizing flow path 81 connects the inside of the valve chamber 31A and the through hole 61 to each other. The high-pressure refrigerant existing in the gap between the inner surface of the valve chamber 31A and the outer surface 60a of the valve element 60 enters the through hole 61 via the pressure equalizing flow path 81, and the high-pressure refrigerant and the low-pressure refrigerant are mixed to be balanced in pressure. As a result, it is possible to reduce the rotational torque for rotating the valve element 60 between the first orientation and the second orientation. However, the opening and closing mechanism 82 rotates the drive shaft 66 but does not rotate the valve element 60 until the pressure equalizing flow path 81 is opened.

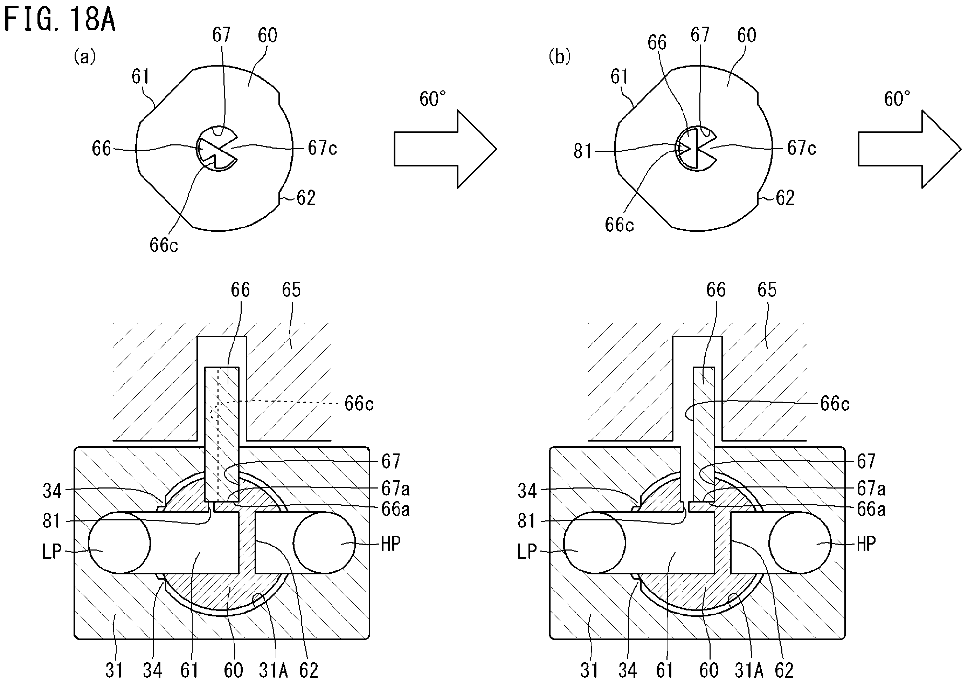

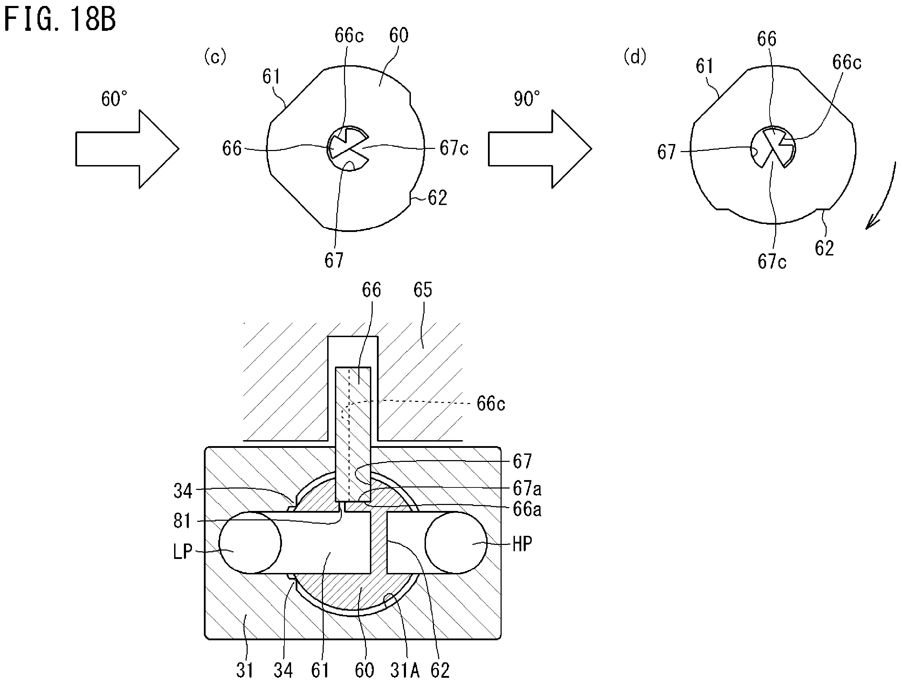

FIG. 18A and FIG. 18B are explanatory diagrams showing a flow of operation of the flow path switching valve. The flow path switching valve 18 operates in the order of (a) and (b) of FIG. 18A and (b) and (c) of FIG. 18B (or in the reverse order).

First, during the cooling operation or the heating operation, as shown in (a) of FIG. 18A, the side surface 66d of the drive shaft 66 abuts on one side surface of the rotation restrictor 67c, and the end surface 66a of the drive shaft 66 closes the pressure equalizing flow path 81. When switching from the cooling operation to the heating operation, the control unit 20 activates the drive unit 64 (see FIG. 4) of the drive mechanism 40B to rotate the drive shaft 66. At this time, for example, the drive shaft 66 is rotated by 60° to shift the state of (a) to the state of (b) in FIG. 18A. As a result, the communication path 66c coincides with the pressure equalizing flow path 81, the pressure equalizing flow path 81 is opened via the communication path 66c, and the refrigerant in the valve chamber 31A is equalized in pressure.

The control unit 20 temporarily stops the drive unit 64 until a predetermined time elapses in this state. Thereafter, by rotating the drive shaft 66 by 60°, the control unit 20 shifts from the state of (b) in FIG. 18A to the state of (c) in FIG. 18B, and closes the pressure equalizing flow path 81 again at the end surface 66a of the drive shaft 66. Then, as shown in (d) of FIG. 18B, the control unit 20 further rotates the drive shaft 66 by 90° to switch the valve element 60 between the first orientation and the second orientation.

Although the pressure equalizing flow path 81 is closed again in the state of (c) in FIG. 18B, the refrigerant in the valve chamber 31A is almost equalized at that time. Therefore, the rotational torque of the drive shaft 66 remains reduced, and the drive shaft 66 can be rotated with low torque. Once the valve element 60 rotates, the through hole 61 of the valve element 60 communicates with the valve chamber 31A even without using the pressure equalizing flow path 81, and thus, the valve element 60 can be rotated with low torque.

In the second embodiment, the communication path 66c formed in the drive shaft 66 is formed over the entire length direction of the drive shaft 66, but is only required to be formed only in a range (for example, a range located in the valve chamber 31A) where the pressure equalizing flow path 81 is opened to connect the inside of the valve chamber 31A and the through hole 61.

### [Embodiment 3]

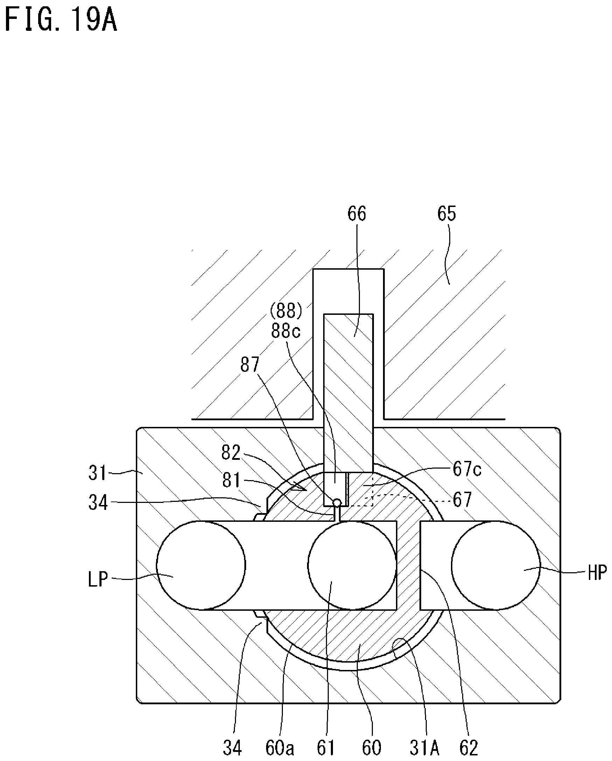

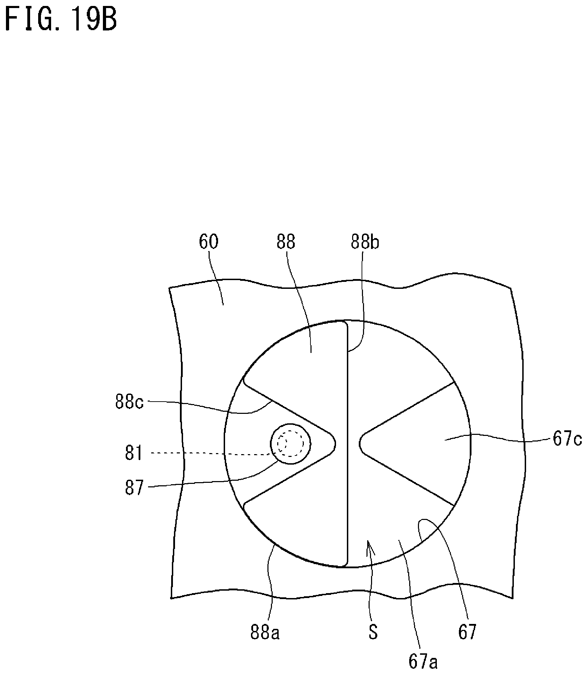

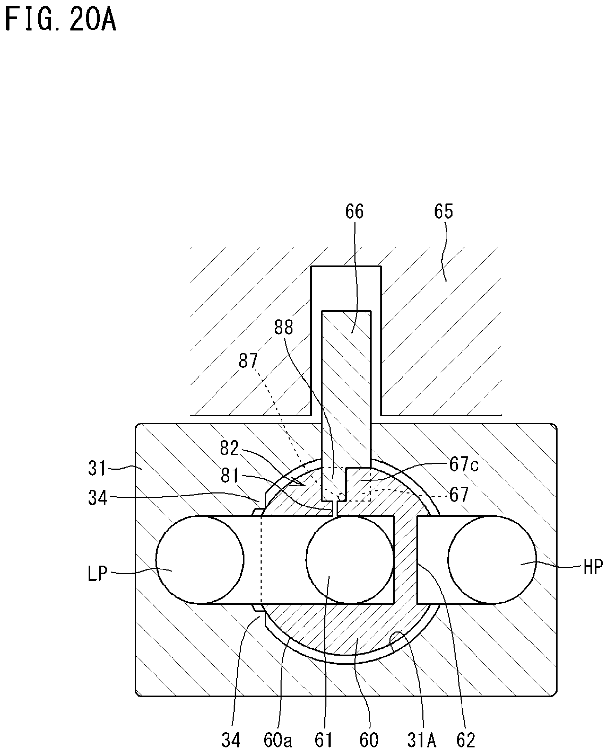

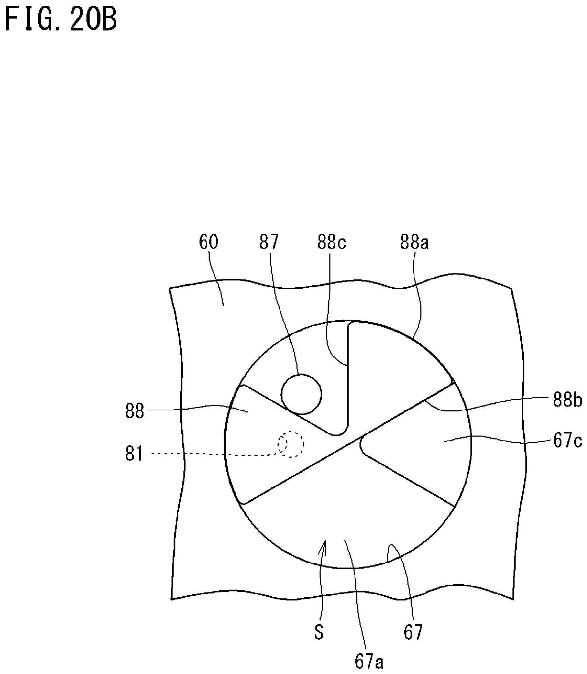

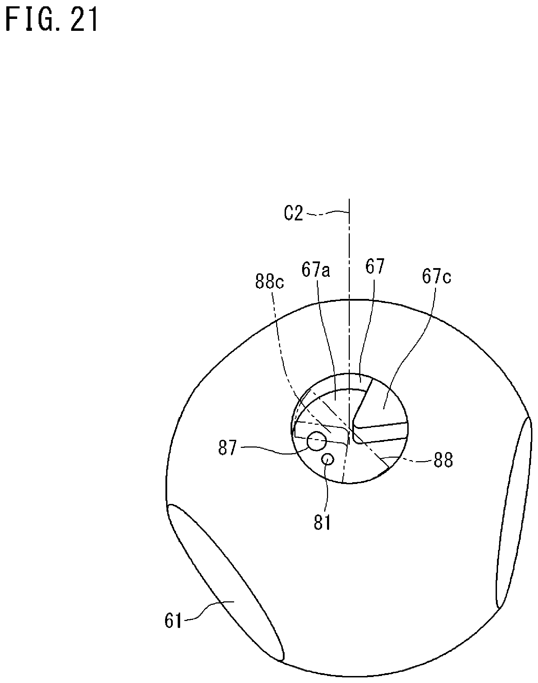

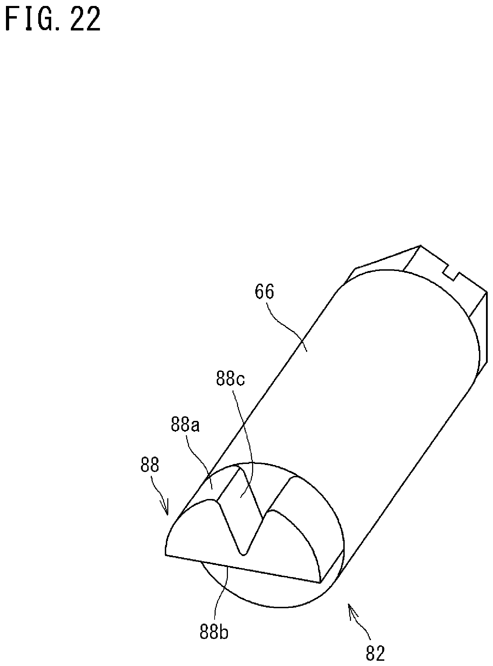

FIG. 19A and FIG. 20A are schematic explanatory diagrams of the flow path switching valve showing a state of the pressure equalizing mechanism in a third embodiment, and FIG. 19B and FIG. 20B are plan views showing a positional relationship between the pressure equalizing flow path and the shutoff member in the state shown in FIG. 19A and FIG. 20A, respectively. In particular, FIG. 19A to FIG. 20B each show a state in which the valve element 60 is in the first orientation or the second orientation. FIG. 21 and FIG. 22 are perspective views of the valve element and the drive shaft, respectively.

In the pressure equalizing mechanism 80 according to the present embodiment, the configuration of the opening and closing mechanism 82 is different from that of the second embodiment.

As shown in FIG. 21, as in the second embodiment, the pressure equalizing flow path 81 is formed in the bottom portion 67a of the shaft hole 67, and communicates the shaft hole 67 and the through hole 61 to each other. The pressure equalizing flow path 81 is disposed at a position shifted in the radial direction from the axis C2 of the valve element 60.

The opening and closing mechanism 82 according to the present embodiment includes a shutoff member 87 that closes the pressure equalizing flow path 81. The shutoff member 87 according to the present embodiment is a sphere. The shutoff member 87 is disposed in the shaft hole 67 of the valve element 60. The shutoff member 87 has an outer diameter larger than an inner diameter of the pressure equalizing flow path 81. The shutoff member 87 closes the pressure equalizing flow path 81 by covering an upper end of the pressure equalizing flow path 81.

As shown in FIG. 22, the opening and closing mechanism 82 includes an opening and closing operation portion 88 formed on the drive shaft 66. The drive shaft 66 has a cylindrical shape. The opening and closing operation portion 88 is provided at one axial end of the drive shaft 66, and is inserted into the shaft hole 67 (see FIG. 21). The opening and closing operation portion 88 has a semicircular cylindrical shape in which a half of the drive shaft 66 in the circumferential direction is missing. Therefore, the opening and closing operation portion 88 has an arc-shaped outer peripheral surface 88a and a flat side surface 88b.

A housing concave portion 88c is formed in the opening and closing operation portion 88. The shutoff member 87 is housed in the housing concave portion 88c (see FIG. 21). The housing concave portion 88c has a shape in which a part of the outer peripheral surface of the opening and closing operation portion 88 is cut out in a substantially triangular shape toward the axis C2 of the drive shaft 66.

As shown in FIG. 21, the opening and closing mechanism 82 includes the rotation restrictor 67c formed in the shaft hole 67 of the valve element 60 as in the second embodiment. The rotation restrictor 67c is a protruding portion protruding radially inward from an inner periphery of the shaft hole 67. The rotation restrictor 67c occupies (fills) a part of the shaft hole 67 in the circumferential direction. For example, the rotation restrictor 67c occupies a range in which a central angle about the axis C2 is about 60° in the shaft hole 67. Therefore, the shaft hole 67 is substantially formed with a central angle in a range of about 300°, and the opening and closing operation portion 88 of the drive shaft 66 is inserted in a range of 180°. Therefore, the clearance S (see FIG. 19B and FIG. 20B) having a central angle θ of about 120° is formed in the shaft hole 67. The drive shaft 66 idles in the range of the clearance S and does not rotate the valve element 60.

When the drive shaft 66 is rotated within the range of the clearance S and the pressure equalizing flow path 81 is positioned in the housing concave portion 88c, as shown in FIG. 19A and FIG. 19B, the shutoff member 87 is attracted to the pressure equalizing flow path 81 by a pressure difference between the valve chamber 31A and the through hole 61, and covers the upper end of the pressure equalizing flow path 81. Accordingly, the shutoff member 87 closes the pressure equalizing flow path 81.

When the drive shaft 66 is rotated within the range of the clearance S and the pressure equalizing flow path 81 is positioned outside the housing concave portion 88c as shown in FIG. 20A and FIG. 20B, the shutoff member 87 is separated from the pressure equalizing flow path 81. The end surface of the opening and closing operation portion 88 is lightly in contact with the upper end of the pressure equalizing flow path 81 (the bottom portion 67a of the shaft hole 67) or is disposed with a slight gap. Therefore, the pressure equalizing flow path 81 is not closed by the opening and closing operation portion 88 and is opened.

As shown in FIG. 19A and FIG. 19B, when the valve element 60 is in the first orientation or the second orientation and the cooling operation or the heating operation is performed, the pressure equalizing flow path 81 constituting the pressure equalizing mechanism 80 is closed by the shutoff member 87. Therefore, the through hole (first passage) 61 of the valve element 60 through which the low-pressure refrigerant flows, the concave portion (second passage) 62 of the valve element 60 through which the high-pressure refrigerant flows, and the gap between the outer surface 60a of the valve element 60 through which the high-pressure refrigerant exists and the inner surface of the valve chamber 31A are defined by the seal portion 34. Thus, the mixing of the low-pressure refrigerant and the high-pressure refrigerant is suppressed.

In a case where the valve element 60 is rotated between the first orientation and the second orientation to switch the operation of the air conditioner 10, the opening and closing mechanism 82 rotates the drive shaft 66 such that the housing concave portion 88c of the opening and closing operation portion 88 is displaced from the pressure equalizing flow path 81 as shown in FIG. 20A and FIG. 20B. The shutoff member 87, which is disposed in the housing concave portion 88c, is separated from the pressure equalizing flow path 81 along with the rotation of the drive shaft 66. Accordingly, the pressure equalizing flow path 81 is opened and connects the inside of the valve chamber 31A and the through hole 61 to each other.

Therefore, the high-pressure refrigerant existing the gap between the inner surface of the valve chamber 31A and the outer surface 60a of the valve element 60 enters the through hole 61 via the pressure equalizing flow path 81, and the high-pressure refrigerant and the low-pressure refrigerant are mixed to be balanced in pressure. As a result, it is possible to reduce the rotational torque for rotating the valve element 60 between the first orientation and the second orientation. However, the opening and closing mechanism 82 rotates the drive shaft 66 but does not rotate the valve element 60 until the pressure equalizing flow path 81 is opened.

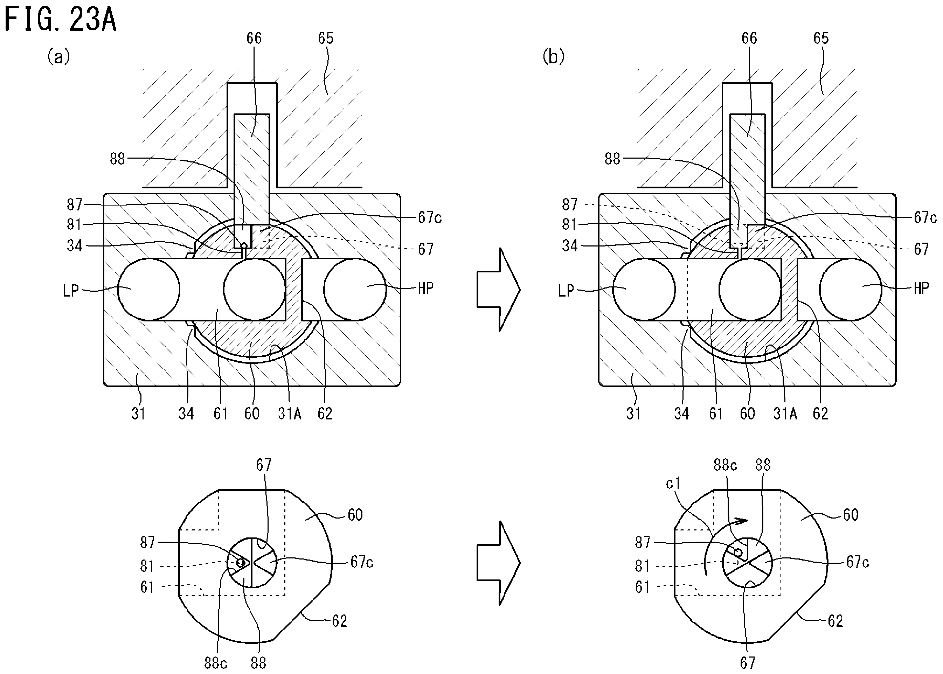

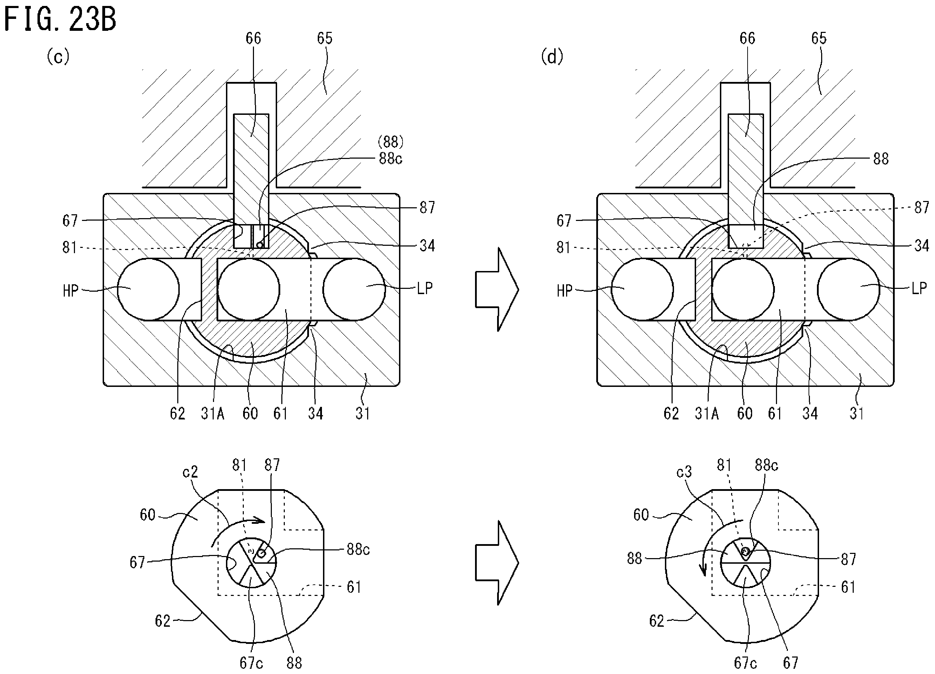

FIG. 23A and FIG. 23B are explanatory diagrams showing a flow of operation of the flow path switching valve.

The flow path switching valve 18 operates in the order of (a) and (b) of FIG. 23A and (c) and (d) of FIG. 23B (or in the reverse order). The operation of pressure equalization will be described with reference to FIG. 23A and FIG. 23B.

First, when the valve element 60 is in the first orientation or the second orientation and the cooling operation or the heating operation is performed, as shown in (a) of FIG. 23A, the housing concave portion 88c in the opening and closing operation portion 88 of the drive shaft 66 is positioned in the pressure equalizing flow path 81, and the shutoff member 87 closes the pressure equalizing flow path 81. This state is the same as shown in FIG. 19A and FIG. 19B.

When switching from the cooling operation to the heating operation, the control unit 20 activates the drive unit 64 (see FIG. 4) of the drive mechanism 40B to rotate the drive shaft 66 by 60° in a state where the compressor 15 is stopped (see arrow c1 in FIG. 23A(b)). As a result, the state of (a) shifts to the state of (b) in FIG. 23A. This state is the same as shown in FIG. 20A and FIG. 20B.

At this time, the housing concave portion 88c deviates from the pressure equalizing flow path 81, and the shutoff member 87 in the housing concave portion 88c is separated from the pressure equalizing flow path 81. Accordingly, the pressure equalizing flow path 81 is opened, and the refrigerant in the valve chamber 31A is equalized in pressure. The rotation of the drive shaft 66 at this time is rotation in the clearance S illustrated in FIG. 19B and FIG. 20B, and does not rotate the valve element 60.

The control unit 20 temporarily stops the drive unit 64 in a state where the pressure is equalized, and stands by until a predetermined time elapses (until the pressure equalization is completed). Thereafter, the control unit 20 rotates the drive shaft 66 by 90° (see arrow c2 in FIG. 23B(c)) to shift the state of (b) in FIG. 23A to the state of (c) in FIG. 23B. Due to the rotation of the drive shaft 66, as shown in FIG. 20B, the side surface 88b of the opening and closing operation portion 88 pushes the side surface of the rotation restrictor 67c to rotate the valve element 60 and switch the valve element 60 between the first orientation and the second orientation. At this time, since the pressure equalizing flow path 81 is opened and the refrigerant in the valve chamber 31A is equalized in pressure, the rotational torque of the drive shaft 66 is reduced, and the valve element 60 can be rotated with low torque.

After switching the valve element 60 between the first orientation and the second orientation, the control unit 20 reversely rotates the drive shaft 66 by 60° (see the arrow c3 in FIG. 23B(d)), and shifts the state of (c) in FIG. 23B to the state of (d) in FIG. 23B. Accordingly, the pressure equalizing flow path 81 is positioned in the housing concave portion 88c of the opening and closing operation portion 88. The shutoff member 87 in the housing concave portion 88c is attracted to the pressure equalizing flow path 81 by the pressure difference between the valve chamber 31A and the passage 61 generated by operating the compressor 15 again, and closes the pressure equalizing flow path 81.

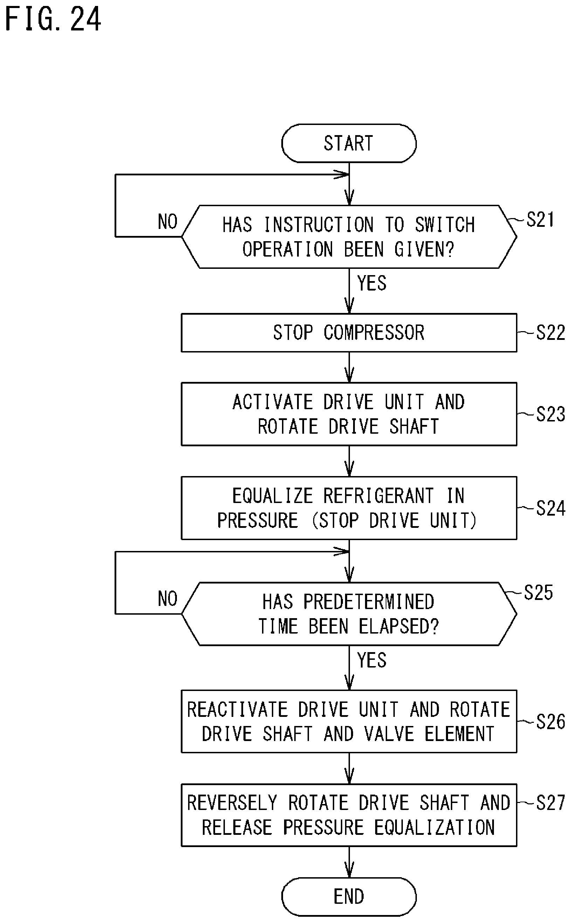

FIG. 24 is a flowchart showing a control procedure of the control unit related to switching of operation in the third embodiment.

When receiving an instruction to switch the operation, for example, an instruction to switch between the cooling operation and the heating operation, an instruction to switch between the heating operation and the defrost operation, or an instruction to switch between the heating operation and a stop to the heating operation (step S21), the control unit 20 stops the compressor 15 (step S22). Next, the drive unit 64 (see FIG. 4) of the four-way switching valve 18 is activated to rotate the drive shaft 66 (step S23). At this time, the drive shaft 66 is rotated by 60° to shift the state of (a) to the state of (b) in FIG. 23A. Accordingly, the pressure equalizing flow path 81 is opened, and the refrigerant in the valve chamber 31A is equalized in pressure (step S24). In this state, the drive unit 64 is temporarily stopped.

The control unit 20 determines whether a predetermined time has elapsed (step S25). This predetermined time is a time during which the refrigerant in the valve chamber 31A can be sufficiently equalized to such an extent that the valve element 60 can be rotationally operated. Since the pressure equalizing flow path 81 is a small hole formed in the shaft hole 67 of the valve element 60, it takes a corresponding time to equalize the pressure. However, by stopping the compressor 15, it is considered that the pressure equalization is completed in as short a time as possible.

When the predetermined time has elapsed, the control unit 20 actuates the drive unit 64 again to further rotate the drive shaft 66 by 90° and shift the state of (b) in FIG. 23A to the state of (c) in FIG. 23B (step S26). As a result, the valve element 60 is switched between the first orientation and the second orientation. Since the refrigerant in the valve chamber 31A is sufficiently equalized in pressure in the state of (b) in FIG. 23A, the valve element 60 can be rotated with low torque.

Thereafter, the control unit 20 rotates the drive shaft 66 by 60° in an opposite direction. Accordingly, the pressure equalizing flow path 81 is positioned in the housing concave portion 88c of the opening and closing operation portion 88. As a result, a switching operation of the orientation of the valve element 60 is completed. Thereafter, when the compressor 15 is activated to start the cooling operation or the heating operation, a pressure difference is generated between the valve chamber 31A and the through hole 61, and the shutoff member 87 in the housing concave portion 88c is attracted to the pressure equalizing flow path 81 to close the pressure equalizing flow path 81. Accordingly, the cooling operation or the heating operation can be performed.

Furthermore, in a case where the cooling operation and the heating operation are switched, the drive shaft 66 is only required to be rotated in a direction opposite to a rotation direction of the drive shaft 66 in the above description.

In the third embodiment, it is sufficient that the housing concave portion 88c of the opening and closing operation portion 88 can house the shutoff member 87 and can move the shutoff member 87 by the rotation of the drive shaft 66 to open and close the pressure equalizing flow path 81, and the specific arrangement and shape of the housing concave portion 88c can be appropriately changed. For example, the housing concave portion 88c may be a concave portion formed on the end surface (lower surface) of the opening and closing operation portion 88 and having a depth that can allow the movement of the shutoff member 87 in the axial direction of the drive shaft 66 along with the opening and closing of the pressure equalizing flow path 81. In the third embodiment, the angle of rotation of the drive shaft 66 for the pressure equalizing operation can also be appropriately changed.

In the third embodiment, the shape of the shutoff member 87 is not limited to a sphere, and can be appropriately changed. For example, the shutoff member 87 may have a cylindrical shape, and only an end that closes the upper end of the pressure equalizing flow path 81 may have a spherical shape or a conical shape.

### [Other embodiments]

The flow path switching valve 18 according to the above embodiment stops the drive unit 64 for a predetermined time (steps S3 and S4 in FIG. 13B and step S24 in FIG. 24) or varies the speed of the drive unit 64 (the rotational speed of the drive shaft 66) (steps S12 to S15 in FIG. 13C) when the pressure equalizing mechanism 80 equalizes the refrigerant in pressure. However, in a case where the pressure equalizing of the refrigerant is sufficiently performed, the flow path switching valve 18 may continuously perform the pressure equalizing operation to the rotation of the valve element at a constant speed without stopping the drive unit 64 or the like. In the first and second embodiments, the compressor 15 may be stopped when the pressure equalizing mechanism 80 equalizes the refrigerant in pressure as in the third embodiment.

The flow path switching valve 18 according to the above embodiment includes the valve body 40A having a cylindrical outer shape, but the present disclosure is not limited to this configuration. For example, the valve body 40A may have a substantially rectangular parallelepiped shape.

In the above embodiment, the seal portions 34a to 34d are formed on the inner surface of the valve chamber 31A in the flow path portion 32, but may be integrally formed around the openings 61a and 61b of the through hole (passage) 61 in the valve element 60. In this case, the distal ends of the seal portions 34a to 34d come into contact with the inner surface of the valve chamber 31A, and leakage of the refrigerant into the gap between the distal ends and the inner surface can be suppressed.

In the valve element 60 according to the above embodiment, the through hole 61 constituting a passage for the low-pressure refrigerant and the concave portion 62 constituting a passage for the high-pressure refrigerant are formed. However, the present disclosure is not limited to this configuration. For example, the valve element 60 may have a concave portion as a passage for the low-pressure refrigerant or a through hole as a passage for the high-pressure refrigerant. The valve element 60 is not limited to the spherical shape as described above, and may have another shape such as a cylindrical shape.

In the valve element 60 according to the above embodiment, the axis C2 of the valve element 60 faces the horizontal direction but may face the up-down direction. The axis C2 of the valve element 60 may be oriented in a direction inclined with respect to the up-down direction and the horizontal direction.

In the above embodiment, the flow path switching valve 18 is used as a four-way switching valve, but may be used as a three-way switching valve.

### [Functional effects of embodiments]

(1) The flow path switching valve (four-way switching valve) 18 according to each of the above embodiments includes the housing 31 including the valve chamber 31A inside, and a valve element 60 that is rotatably housed in the valve chamber 31A and is switched between the first orientation and the second orientation by being rotationally operated. In the housing 31, a first refrigerant flow path (for example, the refrigerant flow path 52b), a second refrigerant flow path (for example, the refrigerant flow path 56b), and a third refrigerant flow path (for example, the refrigerant flow path 53b) that communicate the valve chamber 31A with the outside of the housing 31 are formed, and the valve element 60 includes the first passage (through hole) 61 that connects the first refrigerant flow path 52b and the second refrigerant flow path 56b in the first orientation, connects the first refrigerant flow path 52b and the third refrigerant flow path 53b in the second orientation, and in which a refrigerant having a first pressure flows. Furthermore, the valve element 60 has the second passage (concave portion) 62 that communicates with the third refrigerant flow path 53b in the first orientation, communicates with the second refrigerant flow path 56b in the second orientation, and in which the refrigerant having a second pressure higher than the first pressure flows. The valve chamber 31A and the second passage 62 communicate with each other when the valve element 60 is in the first orientation or the second orientation. The flow path switching valve 18 includes the pressure equalizing mechanism 80 that is switchable between a mode of connecting the first passage 61 and the valve chamber 31A and a mode of canceling the connection, and allows connection of the first passage 61 and the valve chamber 31A when the valve element 60 is in the first orientation or the second orientation.
   In this configuration, by connecting the first passage 61 and the valve chamber 31A by the pressure equalizing mechanism 80, a high-pressure (second pressure) refrigerant and a low-pressure (first pressure) refrigerant can be mixed in the flow path switching valve 18, and the refrigerant can be balanced in pressure (equalized in pressure). Therefore, a torque for rotating the valve element 60 can be reduced, and the drive unit 64 as a motor can be downsized, the decelerator 65 can be downsized, and the like. In particular, since the pressure equalizing mechanism 80 can equalize the refrigerant in pressure when the valve element 60 is in the first orientation or the second orientation, it is not necessary to rotate the valve element 60 for equalizing the refrigerant in pressure, and the valve element 60 can be rotated after the pressure equalization is completed and the rotational torque is sufficiently reduced.
(2) In each of the above embodiments, a fourth refrigerant flow path (for example, the refrigerant flow path 51b) communicating the valve chamber 31A with outside of the housing 31 is formed in the housing 31, and the second passage 62 connects the third refrigerant flow path 53b and the fourth refrigerant flow path 51b in the first orientation, and connects the second refrigerant flow path 56b and the fourth refrigerant flow path 51b in the second orientation. In such a configuration, the high-pressure refrigerant can flow by utilizing the second passage 62, and the flow path switching valve 18 can be used as a four-way switching valve.
(3) In each of the above embodiments, the pressure equalizing mechanism 80 includes the pressure equalizing flow path 81 that connects the first passage 61 and the valve chamber 31A, and the opening and closing mechanism 82 that opens and closes the pressure equalizing flow path 81. In such configuration, the high-pressure refrigerant and the low-pressure refrigerant can be mixed via the pressure equalizing flow path 81.
(4) In each of the above embodiments, provided is the operation mechanism (drive mechanism) 40B that rotationally operates the valve element 60, the operation mechanism 40B includes the drive shaft 66 disposed on the axis C2 of the valve element 60, the valve element 60 includes the coupling portion 67 to which the drive shaft 66 is coupled and in which the pressure equalizing flow path 81 is formed, and the opening and closing mechanism 82 opens and closes the pressure equalizing flow path 81 by moving the drive shaft 66.
   In such a configuration, the opening and closing mechanism 82 can be configured by using the drive shaft 66 configuring the operation mechanism 40B.
(5) In each of the above embodiments, the operation mechanism 40B includes the drive unit 64 that rotates the drive shaft 66 for the rotational operation of the valve element 60, and the opening and closing mechanism 82 opens and closes the pressure equalizing flow path 81 by using rotation of the drive shaft 66 by the drive unit 64. In such a configuration, the opening and closing mechanism 82 can be configured by using the drive shaft 66 and the drive unit 64 configuring the operation mechanism 40B. Therefore, the drive unit dedicated to the opening and closing mechanism 82 can be omitted.
(6) In the first embodiment, the opening and closing mechanism 82 includes a converter 85b, 85c, 83 that converts the rotation of the drive shaft 66 by the drive unit 64 into axial movement of the drive shaft 66, and the pressure equalizing flow path 81 is opened and closed by the converter moving the drive shaft 66 in the axial direction. In such a configuration, the drive shaft 66 is moved in the axial direction by using the rotation of the drive shaft 66 by the drive unit 64, and the pressure equalizing flow path 81 can be opened and closed.
(7) In the first embodiment, the converter includes the cam surfaces 85b and 85c provided on one of the coupling portion 67 or the drive shaft 66 and displaced in the axial direction in accordance with the position around the drive shaft 66, and the cam receiver (protrusion) 83 provided on the other one of the coupling portion 67 or the drive shaft 66 and in contact with the cam surfaces 85b and 85c. In this configuration, the drive shaft 66 is moved in the axial direction along the cam surfaces 85b and 85c by rotating the drive shaft 66, and the pressure equalizing flow path 81 can be opened and closed.
(8) In each of the above embodiments, the drive shaft 66 has the axial end surface 66a that closes the pressure equalizing flow path 81. In such configuration, the pressure equalizing flow path 81 can be easily opened and closed by movement of the drive shaft 66 in the axial direction.
(9) In the second embodiment, the communication path 66c communicating with the valve chamber 31A is formed in a part of the drive shaft 66 in the circumferential direction, and the opening and closing mechanism 82 causes the drive unit 64 to rotate the drive shaft 66 to a rotational position at which the communication path 66c communicates with the pressure equalizing flow path 81 and a rotational position at which the communication is canceled. In such a configuration, the pressure equalizing flow path 81 can be opened and closed by rotating the drive shaft 66.
(10) In the third embodiment, the opening and closing mechanism 82 includes the shutoff member 87 that closes the pressure equalizing flow path 81 and moves by the rotation of the drive shaft 66. Furthermore, the opening and closing mechanism 82 causes the drive unit 64 to rotate the drive shaft 66 to a rotational position at which the pressure equalizing flow path 81 is closed by the shutoff member 87 and a rotational position at which the pressure equalizing flow path 81 is released from being closed. In such a configuration, the pressure equalizing flow path 81 can be opened and closed by rotating the drive shaft 66.
   In the third embodiment, by providing the dedicated shutoff member 87 (separately from the drive shaft 66) that closes the pressure equalizing flow path 81, the shutoff member 87 can be formed in a shape (for example, spherical shape) suitable for closing the pressure equalizing flow path 81, and the workability of the drive shaft 66 and the like can be improved.
(11) In each of the above embodiments, the refrigeration apparatus 10 further includes the control unit 20 that controls the pressure equalizing mechanism 80 (opening and closing mechanism 82), in which when receiving a signal for rotating the valve element 60, the control unit 20 controls the pressure equalizing mechanism 80 to connect the first passage 61 and the valve chamber 31A for a predetermined time in a state where the valve element 60 is in the first orientation or the second orientation. In such a configuration, the high-pressure refrigerant and the low-pressure refrigerant can be sufficiently equalized in pressure, and the valve element 60 can be rotated in a state where the rotational torque of the valve element 60 is reduced.

While the embodiments have been described above, it will be understood that various changes in forms and details can be made without departing from the gist and scope of the claims.

### REFERENCE SIGNS LIST

- 10: refrigeration apparatus
- 18: flow path switching valve
- 20: control unit
- 30: refrigerant circuit
- 31: housing
- 31A: valve chamber
- 40B: drive mechanism (operation mechanism)
- 51b: refrigerant flow path
- 52b: refrigerant flow path
- 53b: third refrigerant flow path
- 56b: refrigerant flow path
- 60: valve element
- 61: through hole (first passage)
- 62: concave portion (second passage)
- 64: drive unit
- 66: drive shaft
- 66a: end surface
- 66c: communication path
- 67: shaft hole (coupling portion)
- 80: pressure equalizing mechanism
- 81: pressure equalizing flow path
- 82: opening and closing mechanism
- 83: protrusion (cam receiver; converter)
- 85b: cam surface (converter)
- 85c: cam surface (converter)
- 87: shutoff member
- 88: opening and closing operation portion
- C2: axis

## Claims

1. A flow path switching valve comprising:
a housing (31) including a valve chamber (31A) inside; and
a valve element (60) that is rotatably housed in the valve chamber (31A) and is switched between a first orientation and a second orientation by being rotationally operated, wherein
a first refrigerant flow path (52b), a second refrigerant flow path (56b), and a third refrigerant flow path (53b) that communicate the valve chamber (31A) with an outside of the housing (31) are formed in the housing (31), and
the valve element (60) includes
a first passage (61) that connects the first refrigerant flow path (52b) and the second refrigerant flow path (56b) in the first orientation, and connects the first refrigerant flow path (52b) and the third refrigerant flow path (53b) in the second orientation, and through which a refrigerant having a first pressure flows, and
a second passage (62) that communicates with the third refrigerant flow path (53b) in the first orientation, communicates with the second refrigerant flow path (56b) in the second orientation, and through which a refrigerant having a second pressure higher than the first pressure flows,
the valve chamber (31A) and the second passage (62) communicate with each other when the valve element (60) is in the first orientation or the second orientation, and
the flow path switching valve includes a pressure equalizing mechanism (80) that is switchable between a mode of connecting the first passage (61) and the valve chamber (31A) and a mode of canceling the connection, and allows connection of the first passage (61) and the valve chamber (31A) when the valve element (60) is in the first orientation or the second orientation.

2. The flow path switching valve according to claim 1, wherein
a fourth refrigerant flow path (51b) communicating the valve chamber (31A) with the outside of the housing (31) is formed in the housing (31), and
the second passage (62)
connects the third refrigerant flow path (53b) and the fourth refrigerant flow path (51b) in the first orientation, and
connects the second refrigerant flow path (56b) and the fourth refrigerant flow path (51b) in the second orientation.

3. The flow path switching valve according to claim 1 or 2, wherein the pressure equalizing mechanism (80) includes a pressure equalizing flow path (81) that connects the first passage (61) and the valve chamber (31A), and an opening and closing mechanism (82) that opens and closes the pressure equalizing flow path (81).

4. The flow path switching valve according to claim 3, further comprising an operation mechanism (40B) that rotationally operates the valve element (60), wherein
the operation mechanism (40B) includes a drive shaft (66) disposed on an axis (C2) of the valve element (60),
the valve element (60) includes a coupling portion (67) to which the drive shaft (66) is coupled and in which the pressure equalizing flow path (81) is formed, and
the opening and closing mechanism (82) opens and closes the pressure equalizing flow path (81) by moving the drive shaft (66).

5. The flow path switching valve according to claim 4, wherein
the operation mechanism (40B) includes a drive unit (64) that rotates the drive shaft (66) for a rotational operation of the valve element (60), and
the opening and closing mechanism (82) opens and closes the pressure equalizing flow path (81) by using rotation of the drive shaft (66) by the drive unit (64).

6. The flow path switching valve according to claim 5, wherein the opening and closing mechanism (82) includes a converter that converts the rotation of the drive shaft (66) by the drive unit (64) into axial movement of the drive shaft (66), and the pressure equalizing flow path (81) is opened and closed by the converter moving the drive shaft (66) in the axial direction.

7. The flow path switching valve according to claim 6, wherein the converter includes a cam surface (85b, 85c) that is provided on one of the coupling portion (67) or the drive shaft (66) and has an axial position changing in a circumferential direction of the drive shaft (66), and a cam receiver (83) provided on another one of the coupling portion (67) or the drive shaft (66) and in contact with the cam surface (85b, 85c).

8. The flow path switching valve according to claim 6 or 7, wherein the drive shaft (66) has an axial end surface that closes the pressure equalizing flow path (81).

9. The flow path switching valve according to claim 5, wherein
a communication path (66c) communicating with the valve chamber (31A) is formed in a part of the drive shaft (66) in the circumferential direction, and
the opening and closing mechanism (82) causes the drive unit (64) to rotate the drive shaft (66) to a rotational position at which the communication path (66c) communicates with the pressure equalizing flow path (81) and a rotational position at which the communication is canceled.

10. The flow path switching valve according to claim 5, wherein
the opening and closing mechanism (82) includes a shutoff member (87) that closes the pressure equalizing flow path (81) and moves by rotation of the drive shaft (66), and
the opening and closing mechanism (82) causes the drive unit (64) to rotate the drive shaft (66) to a rotational position at which the pressure equalizing flow path (81) is closed by the shutoff member (87) and a rotational position at which the pressure equalizing flow path (81) is released from being closed.

11. A refrigeration apparatus comprising a refrigerant circuit (30) including the flow path switching valve (18) according to any one of claims 1 to 10.

12. The refrigeration apparatus according to claim 11, further comprising a control unit (20) that controls the pressure equalizing mechanism (80) of the flow path switching valve (18), wherein
when receiving a signal for rotating the valve element (60), the control unit (20) controls the pressure equalizing mechanism (80) to connect the first passage (61) and the valve chamber (31A) for a predetermined time in a state where the valve element (60) is in the first orientation or the second orientation.
